# EUROPEAN PATENT APPLICATION

(11) **EP 2 277 940 A1**
(43) Date of publication of application: **26.01.2011**
(21) Application number: 09738825.0
(22) Date of filing: 28.04.2009
(51) Int. Cl.: C08G 77/442, B60C 1/00, B60C 15/06, B60C 17/00, C08F 4/10, C08F 8/42, C08L 15/00

(54) **PROCESS FOR PRODUCTION OF MODIFIED CONJUGATED DIENE COPOLYMER, MODIFIED CONJUGATED DIENE COPOLYMER PRODUCED BY THE PROCESS, RUBBER COMPOSITION, AND TIRE**

(30) Priority: 30.04.2008 JP 2008119349
(71) Applicant: Bridgestone Corporation, Tokyo 104-8340 (JP); JSR Corporation, Tokyo 105-8640 (JP)
(72) Inventor: TANAKA, Ken, Kodaira-shi Tokyo 187-8531 (JP); OZAWA, Yoichi, Kodaira-shi Tokyo 187-8531 (JP); NAKAGAWA, Ryuji, Kodaira-shi Tokyo 187-8531 (JP); SONE, Takuo, Tokyo 105-8640 (JP); MATSUMOTO, Takaomi, Tokyo 105-8640 (JP); NAGATA, Yutaka, Tokyo 105-8640 (JP)
(74) Representative: Lamb, Martin John Carstairs
(86) International application number: PCT/JP2009/058354
(87) International publication number: WO 2009/133888

(57) **Abstract**

A process for producing a modified conjugated diene-based copolymer comprising bringing a modifier into reaction with the active end of a copolymer of a conjugated diene compound and an aromatic vinyl compound having the active end, wherein a compound having (i) a hydrolyzable functional group having silicon and (ii) a group which can be converted into a protonic amino group or a protonic amino group protected with an eliminable functional group after the reaction is used as the modifier, a step of adding a condensation catalyst is conducted after the modifier is brought into the reaction, and the content of the unit of the aromatic vinyl compound and the structure of the chain of the aromatic vinyl compound are specified. The process provides a modified conjugated diene-based copolymer which is a modified product of a copolymer of a conjugated diene and an aromatic vinyl compound, provides excellent interaction between the rubber component and carbon black and/or silica, can further improve dispersion of the fillers and provides a tire exhibiting excellent low heat buildup property, fracture properties and abrasion resistance.

## Description

### TECHNICAL FIELD

The present invention relates to a process for producing a modified conjugated diene-based copolymer, a modified conjugated diene-based copolymer obtained by the process, a rubber composition and a tire. More particularly, the present invention relates to a process for producing a modified conjugated diene-based copolymer which provides excellent interaction between the rubber component and carbon black and/or silica, can improve dispersion of the filler and can provide a tire exhibiting excellent low heat buildup property, fracture properties and abrasion resistance, a modified conjugated diene-based copolymer obtained in accordance with the process, a rubber composition comprising the copolymer and a tire obtained by using the composition and exhibiting the above properties.

### BACKGROUND ART

The requirement for low fuel cost of automobiles is becoming still severer due to the global tendency to regulate discharge of carbon dioxide accompanied with the social requirement for energy saving and increasing interest on the environmental problems. As for the performance of a tire, decreasing the rolling resistance has been required to comply with the requirement. As the method for decreasing the rolling resistance of a tire, the use of a material exhibiting excellent low heat buildup property for a rubber composition has been conducted widely although optimization of the structure of a tire has also been examined.

Many technical developments on modified rubber for rubber compositions using silica and carbon black as the filler has been made to obtain a rubber composition exhibiting a decreased heat buildup described above. Among such technical developments, in particular, the process in which the active end of polymerization of a conjugated diene-based polymer obtained in accordance with the anionic polymerization using an organolithium compounds is modified with an alkoxysilane derivative having a functional group exhibiting interaction with the filler, is proposed as the effective method (for example, refer to Patent References 1, 2 and 3.

The alkoxysilane compound derivatives are silicon compounds having an alkoxy group directly bonded to silicon atom and a functional group having nitrogen exhibiting interaction with the filler in the molecule. Due to the structure described above, the modified conjugated diene-based polymer obtained by modifying the active end of polymerization exhibits the effects of decreasing the rolling resistance of the tire and enhancing the fracture properties and abrasion resistance. However, further decrease in the fuel consumption of automobiles (decrease in the rolling resistance of tires) and improvement in the abrasion resistance has been desired from the standpoint of the energy saving and the environmental problems.

[Patent Reference 1] Japanese Patent Application Laid-Open No. 2001-158837
[Patent Reference 2] Japanese Patent Application Laid-Open No. 2005-232364
[Patent Reference 3] Japanese Patent Application Laid-Open No. 2005-290355

### DISCLOSURE OF THE INVENTION

### [Problems to be Overcome by the Invention]

Under the above circumstances, the present invention has an object of providing a process for producing a modified conjugated diene-based copolymer which comprises a modified product of a copolymer of a conjugated diene compound and an aromatic vinyl compound, exhibits particularly excellent interaction between the rubber component and carbon black and/or silica, can further improve dispersion of the filler and can provide a tire exhibiting excellent low heat buildup property, fracture properties and abrasion resistance, a modified conjugated diene-based copolymer obtained in accordance with the process, a rubber composition comprising the copolymer and a tire using the composition and exhibiting the above properties.

### [Means for Overcoming the Problems]

To achieve the above object, the present inventors conducted intensive studies on the modifier used for modification of the active chain end of polymerization of conjugated diene-based copolymers and the structure of the obtained modified conjugated diene-based copolymers and, as the result, the following knowledge was obtained.
It was found that a compound having a group having a primary amino group and/or a secondary amino group protected with an eliminable functional group and a hydrolyzable functional group having silicon was effective, conducting the condensation using a condensation catalyst having a metal atom after the modification was particularly effective and, as the obtained modified conjugated diene-based copolymer, a copolymer in which the contents of the unit of the aromatic vinyl compound, the single unit chain of the aromatic vinyl compound and the long unit chain of the aromatic vinyl compound comprising at least eight consecutively bonded units of the aromatic vinyl compound had each specified values, was effective.
The present invention has been made based on the knowledge.

The present invention provides:
[1] A process for producing a modified conjugated diene-based copolymer which comprises bringing a modifier into reaction with active end of a copolymer of a conjugated diene compound and an aromatic vinyl compound having the active end, wherein
   (1) as the modifier, a compound having (i) a hydrolyzable functional group having silicon and (ii) a group which can be converted into a protonic amino group or a protonic amino group protected with an eliminable functional group after the reaction is used;
   (2) a step of adding a condensation catalyst is conducted after the modifier is brought into the reaction; and
   (3) the modified conjugated diene-based copolymer is characterized by (a) a content of the unit of the aromatic vinyl compound is 5 to 60% by mass, and
      (b) a content of a single unit chain of the aromatic vinyl compound which comprises a single polymer unit of the aromatic vinyl compound is smaller than 40% by mass of entire bonded aromatic vinyl compound, and a content of a long unit chain of the aromatic vinyl compound which comprises at least eight consecutively bonded units of the aromatic vinyl compound is 10% by mass or smaller of entire bonded aromatic vinyl compounds;
[2] A process for producing a modified conjugated diene-based copolymer described in [1], wherein the protonic amino group is a primary amino group or a secondary amino group;
[3] A process for producing a modified conjugated diene-based copolymer described in any one of [1] and [2], wherein the modifier is selected from silane compounds represented by general formula (1): 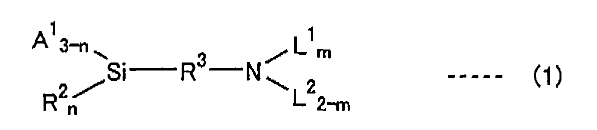 wherein A¹ represents a halogen atom or a hydrocarbyloxy group having 1 to 20 carbon atoms, R² represents a hydrocarbyl group, R³ represents a divalent hydrocarbyl group, L¹ represents an eliminable functional group, L² represents an eliminable functional group or a hydrocarbyl group, the group represented by L² may have a structure same with or different from a structure of the group represented by L¹ when L² represents an eliminable group, the group represented by L¹ and the group represented by L² may be bonded to each other, n represents 0 or 1, and m represents lor 2; 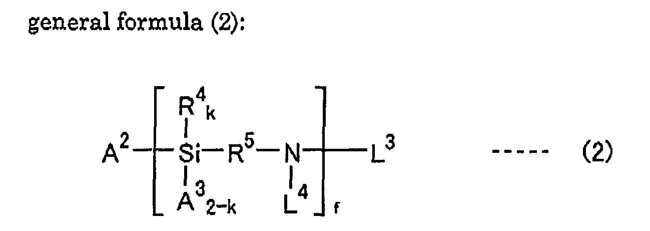 wherein R⁴ represents a hydrocarbyl group having 1 to 20 carbon atoms, R⁵ represents a divalent hydrocarbyl group having 1 to 12 carbon atoms, A² and A³ each independently represent a halogen atom or a hydrocarbyloxy group having 1 to 20 carbon atoms, L³ represents an eliminable functional group or a hydrocarbyl group, L⁴ represents an eliminable functional group, k represents 0 or 1, and f represents an integer of 1 to 10; and 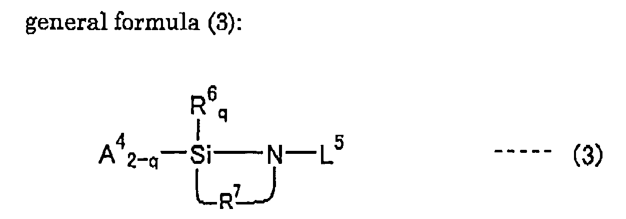 wherein A⁴ represents a halogen atom or a hydrocarbyloxy group having 1 to 20 carbon atoms, R⁶ represents a hydrocarbyl group having 1 to 20 carbon atoms, R⁷ represents a divalent hydrocarbyl group having 1 to 12 carbon atoms, L⁵ represents an eliminable functional group or a
   hydrocarbyl group, and q represents 0 or 1;
[4] A process for producing a modified conjugated diene-based copolymer described in any one of [1] to [3], wherein a heat treatment is conducted in the step of adding a condensation catalyst or after the condensation catalyst is added;
[5] A process for producing a modified conjugated diene-based copolymer described in any one of [1] to [4], wherein the condensation catalyst comprises a metal element;
[6] A process for producing a modified conjugated diene-based copolymer described in any one of [4] and [5], which comprises a step of conducting condensation reaction by the heat treatment in presence of the condensation catalyst;
[7] A process for producing a modified conjugated diene-based copolymer described in any one of [1] to [6], wherein a content of the unit of the aromatic vinyl compound in the modified conjugated diene-based copolymer is 25 to 55% by mass;
[8] A process for producing a modified conjugated diene-based copolymer described in any one of [1] to [7], wherein a content of vinyl bond in the modified conjugated diene-based copolymer is 10 to 50% by mole of entire units of the conjugated diene compound;
[9] A process for producing a modified conjugated diene-based copolymer described in any one of [1] to [8], wherein the copolymer of a conjugated diene compound and an aromatic vinyl compound having active end is obtained by anionic polymerization of the conjugated diene compound and the aromatic vinyl compound using an alkali metal compound as a polymerization initiator;
[10] A process for producing a modified conjugated diene-based copolymer described in any one of [1] to [9], wherein the copolymer of a conjugated diene compound and an aromatic vinyl compound having active end is obtained by anionic polymerization using an alkali metal compound as a polymerization initiator in presence of an ether compound and/or a tertiary amine compound;
[11] A process for producing a modified conjugated diene-based copolymer described in any one of [9] and [10], wherein the copolymer of a conjugated diene compound and an aromatic vinyl compound having active end is obtained by anionic polymerization in presence of at least one potassium salt selected from a group consisting of potassium alkoxides, potassium phenoxides, potassium salts of organic carboxylic acids, potassium salts of organic sulfonic acids and potassium salts of partial esters of organic phosphorous acids in combination with the alkali metal compound;
[12] A process for producing a modified conjugated diene-based copolymer described in [10], wherein the copolymer is obtained by anionic polymerization using tetrahydrofuran or 2,2-bis(2-tetrahydrofuryl)-propane as the ether compound;
[13] A process for producing a modified conjugated diene-based copolymer described in [11], wherein the copolymer is obtained by anionic polymerization using potassium tert-amyloxide or potassium dodecylbenzenesulfonate as the potassium salt;
[14] A process for producing a modified conjugated diene-based copolymer described in any one of [11] to [13], wherein the copolymer is obtained by anionic polymerization using the ether compound and the potassium salt in combination;
[15] A process for producing a modified conjugated diene-based copolymer described in [9], wherein the alkali metal compound used as the polymerization initiator is a Li-based metal compound;
[16] A process for producing a modified conjugated diene-based copolymer described in [15], wherein the Li-based metal compound is an organolithium compound having 1 to 8 carbon atoms;
[17] A process for producing a modified conjugated diene-based copolymer according to any one of Claims 15 and 16, wherein the copolymer is obtained by anionic polymerization using a compound formed by bringing the Li-based metal compound into contact with at least one secondary amine selected from amine compounds represented by following general formula (A) and imine compounds represented by following general formula (B):
   general formula (A) being: 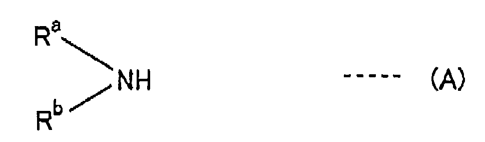 wherein R^{a} and R^{b} each independently represent a hydrocarbyl group having 1 to 20 carbon atoms, and
   general formula (B) being 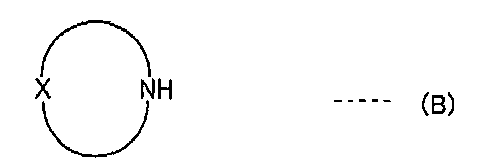 wherein X represents a group selected from following structural groups:
      X-I: cyclic structural groups of saturated type represented by (CR^{c}R^{d})_{n:}
      X-II: cyclic structural groups of saturated type comprising groups represented by (CR^{e}R^{f})ₘ and NR^{g} or a group represented by (CR^{e}R^{f})ₘ and O; and
      X-III: cyclic structural groups having a molecular structure in which at least a portion of carbon-carbon single bonds in portions forming a ring in the structural groups represented by X-1 and X-II is converted into carbon-carbon double bond;
      R^{c}, R^{d}, R^{e} and R^{f} each representing hydrogen atom or a hydrocarbyl group having 1 to 10 carbon atoms selected from aliphatic hydrocarbyl groups, alicyclic hydrocarbyl groups and aromatic hydrocarbyl groups, R^{g} representing a hydrocarbyl group having 1 to 10 carbon atoms selected from aliphatic hydrocarbyl groups, alicyclic hydrocarbyl groups and aromatic hydrocarbyl groups, R^{c}, R^{d}, R^{e}, R^{f} and R^{g} representing atoms or groups same with or different from each other, n representing an integer of 3 to 15, and a sum of integers represented by m being an integer of 2 to 9;
[18] A process for producing a modified conjugated diene-based copolymer described in any one of [1] to [17], wherein the conjugated diene compound is at least one compound selected from 1,3-butadiene, isoprene and 2,3-dimethyl-1,3-butadiene;
[19] A process for producing a modified conjugated diene-based copolymer described in any one of [1] to [18], wherein the aromatic vinyl compound is styrene;
[20] A process for producing a modified conjugated diene-based copolymer described in any one of [1] to [19], wherein the eliminable functional group protecting the primary amino group or the secondary amino group is a trihydrocarbylsilyl group;
[21] A process for producing a modified conjugated diene-based copolymer described in [3], wherein n in general formula (1), k in general formula (2) and q in general formula (3) each represent 1;
[22] A process for producing a modified conjugated diene-based copolymer described in [5], wherein the condensation catalyst comprising a metal element is an organic compound having at least one metal belonging to any one of Group 2 to Group 15 of the Periodic Table (the long period type);
[23] A process for producing a modified conjugated diene-based copolymer described in [22], wherein an alkoxide, a carboxylic acid salt or an acetylacetonate complex salt of the metal is used as the condensation catalyst comprising a metal element;
[24] A process for producing a modified conjugated diene-based copolymer described in any one of [22] and [23], wherein the metal element in the condensation catalyst is Sn element, Ti element, Zr element, Bi element or Al element;
[25] A process for producing a modified conjugated diene-based copolymer described in any one of [3] to [24], wherein A¹ to A⁴ in the general formulae each represent Cl, Br or I;
[26] A process for producing a modified conjugated diene-based copolymer described in any one of [6] to [25], wherein A¹ to A⁴ in the general formulae each represent a hydrocarbyloxy group having 3 to 24 carbon atoms;
[27] A modified conjugated diene-based copolymer obtained in accordance with the process described in any one of [1] to [26];
[28] A rubber composition which uses the modified conjugated diene-based copolymer described in [27] and can be vulcanized with sulfur;
[29] A rubber composition which comprises (A) a rubber component comprising the modified conjugated diene-based copolymer described in [27] and (B) silica and/or carbon black:
[30] A rubber composition described in any one of [28] and [29], wherein a content of the modified conjugated diene-based copolymer in the rubber component of component (A) is 30% by mass or greater;
[31] A rubber composition described in any one of [29] and [30], wherein a content of component (B) is 20 to 120 parts by mass based on 100 parts by mass of the rubber component of component (A);
[32] A pneumatic tire which uses the rubber composition described in anyone of [28] to [31]; and
[33] A pneumatic tire described in [32], wherein the rubber composition is used for at least one member selected from treads, base treads, side reinforcing rubbers and bead fillers.

### THE EFFECT OF THE INVENTION

The process for producing a modified conjugated diene-based copolymer of the present invention is a process for producing a modified product of a copolymer of a conjugated diene compound and an aromatic vinyl compound and exhibits the following effects:
(1) The modified conjugated diene-based copolymer which exhibits particularly excellent interaction between the rubber component and carbon black and/or silica, can further improve dispersion of the filler and can provide a tire exhibiting excellent low heat buildup property, fracture properties and abrasion resistance can be produced since the modification reaction is conducted using as the modifier the compound having (i) a group having a primary amino group or a secondary amino group protected with an eliminable functional group and (ii) a hydrolyzable functional group having silicon, the condensation is conducted using a condensation catalyst, and the structure of the obtained modified conjugated diene-based copolymer is specified.
(2) In particular, the effect described in (1) can be exhibited more excellently by using the compound having the specified structure as the modifier.
In accordance with the present invention, the modified conjugated diene-based copolymer obtained in accordance with the process of the present invention, the rubber composition comprising the copolymer and the tire using the composition and exhibiting the properties described above can be provided.

### THE MOST PREFERRED EMBODIMENT TO CARRY OUT THE INVENTION

The process for producing a modified conjugated diene-based copolymer of the present invention will be described in the following.

### [Process for producing a modified conjugated diene-based copolymer]

The process for producing a modified conjugated diene-based copolymer of the present invention is **characterized in that** the process for producing a modified conjugated diene-based copolymer comprises bringing a modifier into reaction with the active end of a copolymer of a conjugated diene compound and an aromatic vinyl compound having the active end, wherein the modification is conducted using as the modifier a compound having a hydrolyzable functional group having silicon and (ii) a group which can be converted into a protonic amino group or a protonic amino group protected with an eliminable functional group after the reaction, condensation reaction is conducted thereafter using a condensation catalyst, and the modified conjugated diene-based copolymer having the specified structure is produced.

### (Conjugated diene-based copolymer having the active end)

In the present invention, the conjugated diene-based copolymer having the active end is obtained by copolymerization of a conjugated diene compound and an aromatic vinyl compound. The process for producing the copolymer is not particularly limited, and any of the solution polymerization process, the gas phase polymerization process and the bulk polymerization process can be conducted. The solution polymerization is preferable among these processes, and the type of the polymerization may be any of the batch process and the continuous process.
It is preferable that the metal present at the active portion in the molecule of the conjugated diene-based polymer is a metal selected from alkali metals and alkaline earth metals, more preferably a metal selected from alkali metals and most preferably lithium metal.
In the present invention, it is preferable that the copolymer of a conjugated diene compound and an aromatic vinyl compound having the active end is obtained in accordance with the anionic polymerization using an alkali metal compound as the initiator in the presence of an ether compound and/or a tertiary amine compound as described below. It is preferable that the copolymer is obtained in accordance with the anionic polymerization in the presence of at least one potassium salt selected from the group consisting of potassium alkoxides, potassium phenoxides, potassium salts of carboxylic acids, potassium salts of organic sulfonic acids and potassium salts of partial esters of organic phosphorous acids in combination with the alkali metal compound as described below.

Examples of the conjugated diene compound include 1,3-butadiene, isoprene, 1,3-pentadiene, 2,3-dimethyl-1,3-butadiene, 2-phenyl-1,3-butadiene and 1,3-hexadiene. The conjugated diene compound may be used singly or in combination of two or more. Among these conjugated diene compounds, 1,3-butadiene, isoprene and 2,3-dimethyl-1,3-butadiene are preferable.
Examples of the aromatic vinyl compound used for copolymerization with the conjugated diene compound include styrene, α-methylstyrene, l-vinylnaphthalene, 3-vinyltoluene, ethylvinylbenzene, divinylbenzene, 4-cyclohexylstyrene and 2,4,6-trimethylstyrene. The aromatic vinyl compound may be used singly or in combination of two or more. Among these aromatic vinyl compounds, styrene is preferable.

When the copolymerization is conducted using the conjugated diene compound and the aromatic vinyl compound as the monomers, it is preferable that 1,3-butadiene and styrene are used since these monomers are easily available and suitable for practical use, and the property in the anionic polymerization exhibits the living property.
When the solution polymerization process is conducted, it is preferable that the concentration of the monomers in the solvent is 5 to 50% by mass and more preferably 10 to 30% by mass. When the copolymerization is conducted using the conjugated diene compound and the aromatic vinyl compound, the content of the aromatic vinyl compound in the monomer mixture used for the copolymerization is selected in a manner such that the content of the unit of the aromatic vinyl compound in the obtained modified conjugated diene-based copolymer is 20 to 60% by mass, which will be described specifically below.

The lithium compound used as the polymerization initiator is not particularly limited. Hydrocarbyllithiums and lithium amide compounds are preferably used. When the hydrocarbyllithium is used, a conjugated diene-based copolymer having a hydrocarbyl group at the end of initiation of the polymerization and the active end of polymerization at the other end can be obtained. When the lithium amide compound is used, a conjugated diene-based copolymer having nitrogen at the end of initiation of the polymerization and the active end of polymerization at the other end can be obtained.

As the hydrocarbyllithium described above, hydrocarbyllithiums having a hydrocarbyl group having 2 to 20 carbon atoms are preferable. Examples of the hydrocarbyllithium described above include ethyllithium, n-propyllithium, isopropyllithium, n-butyllithium, sec-butyllithium, tert-octyllithium, n-decyl,li.tbdum, phenyllithium, 2-naphthyllithium, 2-butylphenyllithium, 4-phenylbutyllithiura, cyclohexyllithium, cyclopentyllithium and reaction products of diisopropenylbenzene and butyllithium. Among these hydrocarbyllithiums, n-butyllithium is preferable.

Examples of the lithium amide compound include lithium hexamethyleneimide, lithium pyrrolide, lithium piperidide, lithium heptamethyleneimide, lithium dodecamethyleneimide, lithium dimethylamide, lithium diethylamide, lithium dibutylamide, lithium dipropylamide, lithium diheptylamide, lithium dihexylamide, lithium dioctylamide, lithium di-2-ethylhexylamide, lithium dodecylamide, lithium N-methylpiperazide, lithium ethylpropylamide, lithium ethylbutylamide, lithium ethylbenzylamide and lithium methylphenetylamide. From the standpoint of the effect of interaction with carbon black and the ability of initiating the polymerization, cyclic lithium amides such as lithium hexamethyleneimide, lithium pyrrolidide, lithium piperidide, lithium heptamethyleneimide and lithium dodecamethyleneimide are preferable, and lithium hexamethyleneimide and lithium pyrrolidide are more preferable among these lithium amide compounds.

As the lithium amide compound, a compound prepared from a secondary amine and a lithium compound in advance may be used for the polymerization, or the lithium amide compound may be prepared in the polymerization system (in-situ). It is preferable that the amount of the polymerization initiator is selected in the range of 0.2 to 20 mmol based on 100 g of the monomers.

In the present invention, for example, the anionic polymerization may be conducted using a compound formed by bringing the Li-based metal compound described above into contact with at least one secondary amine selected from amine compounds represented by the following general formula (A) and imine compounds represented by the following general formula (B):

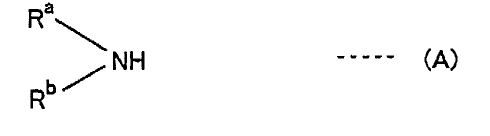

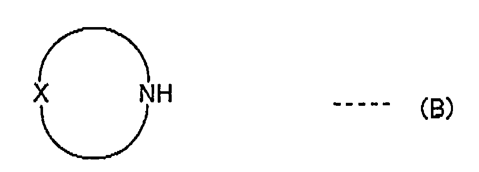

In general formula (A), R^{a} and R^{b} each independently represent a hydrocarbyl group having 1 to 20 carbon atoms. Examples of the hydrocarbyl group having 1 to 20 carbon atoms include aliphatic hydrocarbyl groups, alicyclic hydrocarbyl groups and aromatic hydrocarbyl groups. Preferable examples of the amine compound represented by the above general formula (A) include dimethylamine, diethylamine, dipropylamine, di-n-butylamine, diisobutylamine, dipentylamine, dihexylamine, diheptylamine, dioctylamine, diallylamine, dicyclohexylamine, butylisopxopylamine, dibenzylamine, methylbenzylamine, methylhexylamine and ethylhexylamine. Amines represented by general formula (A) in which R^{a} and R^{b} each represent a group selected from aliphatic hydrocarbyl groups having 1 to 10 carbon atoms are preferable.

In the above general formula (B), it is preferable that the group represented by X is a group selected from the following groups: X-I: cyclic structural groups of the saturated type represented by (CR^{c}R^{d})ₙ; X-II: cyclic structural groups of the saturated type comprising groups represented by (CR^{e}R^{f})ₘ and NR^{g} or a group represented by (CR^{e}R^{f})ₘ and O; and X-III: cyclic structural groups having a molecular structure in which at least a portion of carbon-carbon single bonds in portions forming the ring in the structural groups represented by X-I and X-11 is converted into the carbon-carbon double bond. In the above formulae, R^{c}, R^{d}, R^{e} and R^{f} each represent hydrogen atom or a hydrocarbyl group having 1 to 10 carbon atoms selected from aliphatic hydrocarbyl groups, alicyclic hydrocarbyl groups and aromatic hydrocarbyl groups, R^{g} represents a hydrocarbyl group having 1 to 10 carbon atoms selected from aliphatic hydrocarbyl groups, alicyclic hydrocarbyl groups and aromatic hydrocarbyl groups, R^{c}, R^{d}, R^{e}, R^{f} and R^{g} each may represent atom or group the same with or different from each other, n represents an integer of 3 to 15, and the sum of integers represented by m is an integer of 2 to 9.

When the imine compound represented by the above general formula (B) is a compound in which the group represented by X is the cyclic group represented by X-I, imine compounds having the group represented by general formula X-1 in which R^{c} and R^{d} represent hydrogen or a group selected from aliphatic hydrocarbyl groups having 1 to 8 carbon atoms, and n represents 3 to about 15 are preferable. Examples of the above compound include trimethyleneimine, pyrrolidine, piperidine, 2-methylpiperidine, 3-methylpiperidine, 4-methylpiperidine, 3,5-dimethyl,piperxdine, 2-ethylpiperidine, hexamethyleneimine, heptamethyleneimine and dodecamethyleneimine. Among these compounds, imine compounds having the group represented by X-1 in which R^{c} and R^{d} represents hydrogen atom or a group selected from aliphatic hydrocarbyl groups having 1 to 5 carbon atoms and n represents 3 to 12 are more preferable.

When the imine compounds represented by the above general formula (B) is a compound in which the group represented by X is the cyclic group represent by X-II, imine compounds having the group represented by X-II in which R^{e} and R^{f} represent hydrogen or a group selected from aliphatic hydrocarbyl groups having 1 to 5 carbon atoms, R^{g} represents a group selected from aliphatic hydrocarbyl groups having 1 to 5 carbon atoms, and m represents 3 to 5 are preferable. Examples of the above compound include morpholine, N-methylpiperazine, N-ethylpiperazine, N-methylimidazolidine and N-ethylimidazolidine. Among these compounds, imine compounds having the group represented by X-II in which R^{c} and R^{d} represents hydrogen atom or an aliphatic hydrocarbyl group having 1 to 5 carbon atoms and the sum of the numbers represented by m is 3 to 5 are more preferable.

When the imine compounds represented by the above general formula (B) is a compound in which the group represented by X is the group represented by X-III, imine compounds in which at least a portion of the carbon-carbon single bonds in portions forming a ring in the structural groups represented by X-I and X-II described above as the preferable groups is converted into the carbon-carbon double bond are preferable. Examples of the above compound include oxazine, pyrroline, pyrrol and azepine.

The process for producing the conjugated diene-based copolymer in accordance with the anionic polymerization using the lithium compound described above as the polymerization initiator is not particularly limited, and a conventional process can be used.
Specifically, the conjugated diene-based copolymer as the object product can be obtained by conducting the anionic polymerization of the conjugated diene compound and the aromatic vinyl compound in an organic solvent inert to the reaction, examples of which include hydrocarbon-based solvents such as aliphatic hydrocarbyl compounds, alicyclic hydrocarbyl compounds and aromatic hydrocarbyl compounds, in the presence of the lithium compound described above as the polymerization initiator and the potassium compound or a randomizer which is used where desired.

As the hydrocarbon-based solvent, solvents based on hydrocarbons having 3 to 8 carbon atoms are preferable. Examples of the hydrocarbon-based solvent include propane, n-butane, isobutane, isopentane, n-hexane, cyclohexane, propene, 1-butene, isobutene, trans-2-butene, cis-2-butene, x-pentene, 2-pentene, 1-hexene, 2-hexene, benzene, toluene, xylene and ethylbenzene. The hydrocarbon-based solvent may be used singly or in combination of two or more.

The randomizer which is used where desired is a compound exhibiting effects of: controlling the microstructure of the conjugated diene-based copolymer such as the increase in the amount of the 1,2-bond in the butadiene portion in a butadiene-styrene copolymer and the increase in the amount of the 3,4-bond in an isoprene copolymer; and controlling the distribution of the composition of the monomer units in the copolymer of a conjugated diene compound and an aromatic vinyl compound such as randomization of the butadiene unit and the styrene unit in the copolymer of butadiene and styrene. The randomizer is not particularly limited, and a compound can be suitably selected as desired from conventional compounds widely used as the randomizer.

The microstructure (the content oaf the vinyl bond) in the portion of the conjugated diene in the conjugated diene-based copolymer can be adjusted by adding into the polymerization system an ether compound such as diethyl ether, di-n-butyl ether, ethylene glycol diethyl ether, ethylene glycol dibutyl ether, diethylene glycol dimethyl ether, propylene glycol dimethyl ether, propylene glycol diethyl ether, propylene glycol dibutyl ether, tetrahydrofuran, 2,2-(bistetrahydrofurfuryl)propane, bistetrahydrofurfuryl formal, methyl ether of tetrahydrofurfuryl alcohol, ethyl ether of tetrahydrofururyl alcohol, butyl ether of tetrahydrofurfuryl alcohol, α-methoxytetrahydrofuran, dimethoxybenzene and dimethoxyethane and/or a tertiary amine compound such as triethylamine, pyridine, N,N,N',N'-tetramethylethylenediamine, dipiperidinoethane, methyl ether of N,N-diethylethanolamine, ethyl ether of N,N-diethylethanolamine and butyl ether of N,N-diethylethanolamine.
Among these compounds, tetrahydrofuran and 2,2-(bistetrahydro-furfuryl)propane are preferable.

In the present invention, a potassium salt is added in combination with the polymerization initiator described above so that the single unit chain and the long unit chain of the aromatic vinyl compound are present in specific relative amounts described above. As the potassium salt, potassium alkoxides such as potassium isopropoxide, potassium tert-butoxide, potassium tert-amyloxide, potassium n-heptoxide, potassium benzyloxide and potassium phenoxide as typical examples; potassium salts of organic carboxylic acids such as isovaleric acid, caprylic acid, lauric acid, palmitic acid, stearic acid, oleic acid, linoleic acid, benzoic acid, phthalic acid and 2-ethylhexanoic acid as typical examples; potassium salts of organic sulfonic acids such as dodecylbenzenesulfonic acid, tetradecylbenzenesulfonic acid, hexadecylbenzenesulfonic acid and octadecylbenzenesulfonic acid as typical examples; and potassium salts of partial esters of organic phosphorous acids such as diethyl phosphite, diisopropyl phosphite, diphenyl phosphite, dibutyl phosphite and dilauryl phosphite as typical examples; are used.
Among these potassium salts, potassium tert-amyloxide and potassium dodecylbenzenesulfonate are preferable.

It is preferable that the amount of the potassium compound is suitably selected in the range of about 0.005 to 0.5 moles per 1 g atom equivalent of the alkali metal of the polymerization initiator so that the contents of the single unit chain and the long unit chain are adjusted in the range described above. When the potassium compound is added, alcohols, thioalcohols, organic carboxylic acids, organic sulfonic acids, organic phosphorous acids, primary amines and secondary amines may be used suitably in combination with the potassium compound.

It is preferable that the randomizer and the potassium salt are used in combination. In particular, it is preferable that the combination of potassium tert-amyloxide and tetrahydrofuran, the combination of potassium tert-amyloxide and tetrahydrofuran, the combination of potassium dodecylbenzenesulfonate and tetrahydrofuran or the combination of potassium dodecylbenzenesulfonate and 2,2-(bistetrahydrofurfuryl)propane is used.

It is preferable that the temperature in the polymerization reaction is selected in the range of 0 to 150°C and more preferably in the range of 20 to 130°C. The pressure of the polymerization may be a pressure formed by the reaction. In general, it is preferable that the operation is conducted under a pressure sufficient for keeping the monomer substantially in the liquid state. Where desired, a high pressure may be applied although the pressure depends on the substances used for the polymerization, the medium of the polymerization and the temperature. The pressure can be obtained by a suitable method such as application of a pressure to the reactor with a gas inert to the polymerization reaction.

In the polymerization, it is preferable that materials from which any substances adversely affecting the reaction such as water, oxygen, carbon dioxide and protonic compounds have been removed are used for the raw materials taking part in the polymerization such as the polymerization initiator, the potassium compound, the randomizer, the solvent and the monomers.
It is preferable that the glass transition temperature (Tg) of the obtained conjugated diene-based copolymer obtained in accordance with the differential scanning calorimetry is -95 to -15°C. An increase in the viscosity is suppressed and a conjugated diene-based copolymer which can be easily handled can be obtained by adjusting the glass transition temperature in the above range.

### (Modifier)

In the process for producing a modified conjugated diene-based copolymer of the present invention, a compound having a group having a primary amino group and/or a tertiary amino group protected with an eliminable functional group and a group having a hydrolyzable functional group having silicon as the modifier is brought into reaction with the active end of the conjugated diene-based copolymer having the active end obtained as described above.
As the modifier, a compound selected from silane compounds represented by the following general formulae (1), (2) and (3) is preferably used.

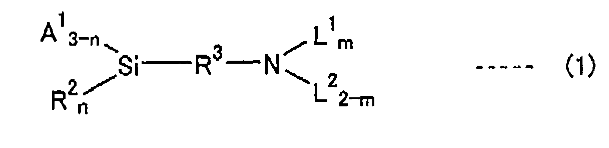

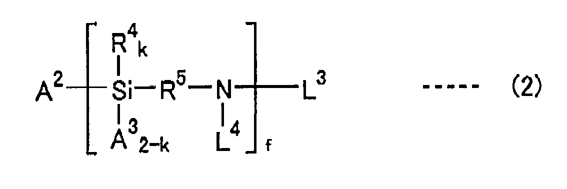

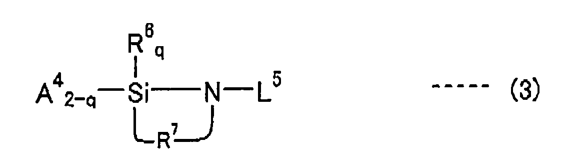

In the above general formula (1), A¹ represents a halogen atom or a hydrocarbyloxy group having 1 to 20 carbon atoms, R² represents a hydrocarbyl group, R³ represents a divalent hydrocarbyl group, L¹ represents an eliminable functional group, L² represents an eliminable functional group or a hydrocarbyl group, the group represented by L² may have a structure the same with or different from the structure of the group represented by L¹ when L² represents an eliminable group, the group represented by L¹ and the group represented by L² may be bonded to each other, n represents 0 or 1, and m represents 1 or 2
As the hydrocarbyl group represented by R², hydrocarbyl groups having 1 to 20 carbon atoms are preferable and, as the divalent hydrocarbyl group represented by R³, hydrocarbyl groups having 1 to 12 carbon atoms are preferable.
In the above general formula (2), R⁴ represents a hydrocarbyl group having 1 to 20 carbon atoms, R⁵ represents a divalent hydrocarbyl group having 1 to 12 carbon atoms, A² and A³ each independently represent a halogen atom or a hydrocarbyloxy group having 1 to 20 carbon atoms, L³ represents an eliminable functional group or a hydrocarbyl group, L⁴ represents an eliminable functional group, k represents 0 or 1, and f represents an integer of 1 to 10.
In the above general formula (3), A⁴ represents a halogen atom or a hydrocarbyloxy group having 1, to 20 carbon atoms, R⁶ represents a hydrocarbyl group having 1 to 20 carbon atoms, R⁷ represents a divalent hydrocarbyl group having 1 to 12 carbon atoms, L⁵ represents an eliminable functional group or a hydrocarbyl group, and q represents 0 or 1.
As shown in the above, N in the above general formulae (1) to (3) has a form in which a primary amino group or a secondary amino group is protected with an eliminable functional group.

In the above general formulae (1) to (3), Cl, Br or I is preferable as the halogen atom represented by A¹ to A⁴, and a hydrocarbyloxy group having 1 to 10 carbon atoms is preferable as the hydrocarbyloxy group having 1 to 20 carbon atoms represented by A¹ to A⁴*.* Examples of the hydrocarbyloxy group having 1 to 10 carbon atoms include alkoxy groups having 1 to 10 carbon atoms, alkenyloxy groups having 2 to 10 carbon atoms, aryloxy groups having 6 to 10 carbon atoms and aralkyloxy groups having 7 to 10 carbon atoms. Among these groups, alkoxy groups having 1 to 10 carbon atoms are preferable from the standpoint of the excellent reactivity. The alkyl group constituting the alkoxy group may be any of a linear group, a branched group and a' cyclic group. Examples of the alkoxy group include methoxy group, ethoxy group, n-propoxy group, isopropoxy group, n-butoxy group, isobutoxy group, sec-butoxy group, text-butoxy group, various types of pentoxy groups, various types of hexoxy groups, various types of heptoxy groups, various types of octoxy groups, various types of decyloxy groups, cyclopentyloxy group and cyclohexyloxy group. From the standpoint of the reactivity, alkoxy groups having 1 to 6 carbon atoms are preferable, and methoxy group and ethoxy group are more preferable among these groups.

In the above general formulae (1) to (3), examples of the hydrocarbyl group having 1 to 20 carbon atoms represented by R², R⁴ and R⁶ include alkyl groups having 1 to 18 carbon atoms, alkenyl groups having 2 to 18 carbon atoms, aryl groups having 6 to 18 carbon atoms and aralkyl groups having 7 to 18 carbon atoms. From the standpoint of the reactivity and the properties of the modifier, alkyl groups having 1 to 18 carbon atoms are preferable, and alkyl groups having 1 to 10 carbon atoms are more preferable among these groups. The alkyl group may be any of a linear group, a branched group and a cyclic group. Examples of the alkyl group include methyl group, ethyl group, n-propyl group, isopropyl group, n-butyl group, isobutyl group, see-butyl group, tert-butyl group, various types of pentyl groups, various types of hexyl groups, various types of octyl groups, various types of decyl groups, cyclopentyl group and cyclohexyl group, From the standpoint of the reactivity and the properties of the modifier, alkyl groups having 1 to 6 carbon atoms are preferable, and methyl group is more preferable.

In the above general formulae (1) to (3), as the divalent hydrocarbyl group having 1 to 12 carbon atoms represented by R³, R⁵ and R⁷, alkandiyl groups having 1 to 12 carbon atoms are preferable, alkandiyl groups having 2 to 10 carbon atoms are more preferable, and alkandiyl group having 2 to 6 carbon atoms are most preferable from the standpoint of the properties of the modifier.
The alkandiyl group having 2 to 6 carbon atom may be any of a linear group, a branched group and a cyclic group. Examples of the alkandiyl group include ethylene group, 1,3-propandiyl group, 1,2-propandiyl group, various types of butandiyl groups, various types of pentandiyl groups and various types of hexandiyl groups. Among these groups, linear groups such as ethylene group, 1,3-propandiyl group, 1,4-butandiyl group, 1.,5-pentandiyl group and 1,6-hexandiyl group are preferable, and 1,3-propandiyl group is more preferable.

In the above general formula (1), L¹ represents an eliminable functional group, and L² represents an eliminable functional group or a hydrocarbyl group. When L² represents an eliminable functional group, the group represented by L² may have a structure the same with or different from the structure of the group represented by L¹. The groups represented by L¹ and L² may be bonded to each other.
In the above general formula (2), L³ represents an eliminable functional group or a hydrocarbyl group, and L⁴ represents an eliminable functional group. In the above general formula (3), L⁵ represents an eliminable functional group or a hydrocarbyl group.
Examples of the eliminable functional group represented by L¹ to L⁴ include trihydrocarbylsilyl groups. Trialkylsilyl groups in which the hydrocarbyl group is an alkyl group having 1, to 10 carbon atoms are preferable, and trimethylsilyl group is more preferable.
Examples of the primary amino group protected with an eliminable group include N,N-bis(trimethylsilyl)amino group. Examples of the secondary amino group protected with an eliminable group include N-(trimethylsilyl)imino group.
As the hydrocarbyl group represented by L², L³ and L⁵, hydrocarbyl groups having 1 to 20 carbon atoms are preferable. Examples of the hydrocarbyl group having 1 to 20 carbon atoms include the corresponding groups described above as the examples of the hydrocarbyl group represented by R², R⁴ and R⁶.

In the present invention, as the silane compound represented by the above general formulae, difunctional compounds in which n in general formula (1), k in general formula (2) and q in general formula (3) each represent 1 and the hydrolyzable functional group is difunctional are preferable.

In the present invention, difunctional hydrocarbyloxysilane compounds represented by general formula (1) in which m represents 2 are preferable as the silane compound represented by general formula (1). The modified end can be introduced into the modified conjugated diene-based copolymer with great efficiency and the interaction with inorganic fillers such as silica can be increased by using the difunctional silane compound described above.

When, for example, m represents 2 in general formula (1), and a primary amino group protected with two eliminable functional groups is present, examples of the silane compound represented by general formula (1) include difunctional alkoxysilane groups such as N,N-bis-trimethylsilyl)aminopropyl(methyl)dimethoxysilane, N,N-bis(trimethylsilyl)aminopropyl(methyl)diethoxysilane, N,N-bis(trimethylsilyl)am.inopropyl(methyl)dipropoxysilane, N,N-bis(trimethylsilyl)aminopropyl(ethyl)-dimethoxysilane, N,N-bis(trimethylsilyl)aminopropyl(ethyl)diethoxysilane, N,N-bis(trimethylsilyl)aminopropyl(ethyl)dipropoxysilane, N,N-bis-(trimethylsilyl)aminoethyl(methyl)dimethoxysilane, N,N-bis(trimethylsilyl)aminoethyl(methyl)diethoxysilane, N,N-bis(trnmethylsi.lyl)aminoethyl(methyl)dipropoxysilane, N,N-bis(trimethylsilyl)aminoethyl(ethyl)-dimethoxysilane, N,N-bis(trimethylsilyI)aminoethyl(ethyl)diethoxysilane and N,N-bis(trimethylsilyl)aminoethyl(ethyl)dipropoxysilane; difunctional alkoxychlorosilane compounds such as N,N-bis(trimethylsilyl)aminopropyl(methyl)methoxychlorosilane, N,N-bis(trimethylsilyl)aminopropyl-(methyl)ethoxychlorosilane, N,N-bis(trimethylsilyl)aminoethyl(methyl)-methoxychlorosilane and N,N-bis(trimethylsiIyl)aminoethyl(methyl)-ethoxychlorosilane; and difunctional chlorosilane compounds such as N,N-bis(trimethylsilyl)aminopropyl(methyl)dichlorosilane, N,N-bis-(trimethylsilyl)aminopropyl(methyl)dichlorosilane, N,N-bis(trimethylsilyl)aminoethyl(methyl)dichlorosilane and N,N-bis(trnmethylsilyl)aminoethyl(methyl)dichlorosilane.
Among these compounds, N,N-bis(trimethylsilyl)aminopropyl-(methyl)dimethoxysilane, N,N-bis(trimethylsilyI)aminopropyl(methyl)-diethoxysilane and N,N-bis(trimethylsilyl)aminopropyl(methyl)dipropoxy-silane are preferable.

When, for example, m represents 1, L² represents a hydrocarbyl group, and a secondary amino group protected with an eliminable functional group is present in general formula (1), examples of the silane compound represented by general formula (1) include difunctional alkoxysilane compounds such as N-methyl-N-trimethylsilylaminopropyl(methyl)dimethoxysilane, N-methyl-N-trimethylsilylaminopropyl-(methyl)diethoxysilane and N.ethyl-N-trimethylsilylaminopropyl(methyI)-diethoxysilane.

Among the compounds represented by general formula (2), difunctional compounds represented by general formula (2) in which k represents 1 are preferable based on the same reasons as those described for general formula (1).
When f represents 1 in general formula (2), examples of the silane compound represented by general formula (2) include the compounds described as the examples of the compounds represented by general formula (1) in which a primary amino group protected with two eliminable functional groups is present and the compounds represented by general formula (1) in which a secondary amino group protected with one eliminable functional group is present.

In the case of the above general formula (3), difunctional silane compounds represented by general formula (3) in which q represents 1 are preferable based on the same reasons as those described above for general formula (1).
Examples of the silane compound represented by general formula (3) include 1-trimethylsilyl-2-ethoxy-2-methyl-1-aza-2-silacyclopentane, 1-trimethylsilyl-2-methoxy-2-methyl-1-azasilacylcopentane, 1-trimethylsilyl-2,2-diethoxy-l-aza-2-silacyclopentane and 1-trimethylsilyl-2,2-dimethoxy-1-aza-2-silacyclopentane.

It is sufficient that the modifier in the present invention is a compound having a primary amino group or a secondary amino group protected with an eliminable functional group and a hydrolyzable functional group having silicon, and the modifier is not limited to the silane compounds represented by the above general formulae (1), (2) and (3).
For example, (2,2,5,5-tetxamethyl-1-axa-2,5-dxsnlacylopentan-1-yl)-propyl(methyl)dimethoxysilane, (,2,2,5,5-tetramethyl-1-aza-2,5-disilacylopentan-lyl)propyl(methyl)diethoxysilane, N-trimethylsilyl(hexamethyleneimin-2-yI)propyl(methyl)dimethoxysilane, N-trimethylsilyl-(hexamethyleneimin-2-yl)propyl(methyl)diethoxysilane, N-trimethylsilyl-(pyrrolidin-2-yl)propyl(methyl)dimethoxysilane, N-trimethylsilyl-(pyrrolidin-2-yl)propyl(methyl)diethoxysilane, N-trimethylsilyl(piperidin-2-yl)propyl(methyl)dimethoxysilane, N-trimethylsilyl(piperidin-2-yl)-propyl(methyl)diethoxysilane, N-trimethylsilyl(imidazol-2-yl)propyl-(methyl)dimethoxysilane and N-trimethylsilyl(imidazol-2-yl)propyl-(methyl)diethoxysilane can also be used.

In the present invention, N,N-bis(trimethylsilyl)aminopropyl-(methyl)dimethoxysilane, N,N-bis(trimethylsilyl)aminopropyl(methyl)-diethoxysilane and 1-trimethylsilyl-2-ethoxy-2-ethyl-1-aza-2-silacyclopentane are preferable among the above modifiers.
The modifier may be used singly or in combination of two or more.

### (Modification reaction)

In the modification reaction in the present invention, the modification is conducted by bringing at least one modifier selected from the above modifiers into reaction with the organometallic active end of the conjugated diene-based copolymer having the active end.
It is preferable that the modification reaction with the modifier is conducted as a solution reaction. The solution may comprise the monomers used in the polymerization. The type of the modification reaction is not particularly limited and may be any of the batch reaction and the continuous reaction.
It is preferable that at least 10% of the polymer chain in the conjugated diene-based copolymer used in the modification reaction has the living property.

The reaction of the living chain end of the polymerization, for example, P-Li⁺, and the modifier represented by general formula (2) in which f=1 (the group represented by L³ is an eliminable functional group represented by L^{3a}) can be expressed by the following reaction scheme:

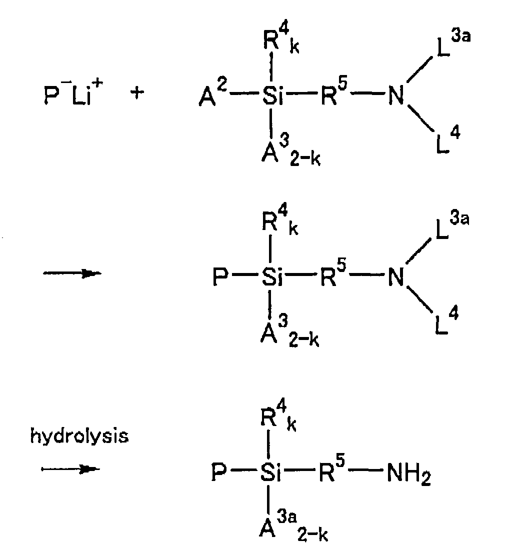

In the above reaction scheme, P represents the polymer chain of the conjugated diene-based copolymer.
R⁴, R⁵, A², A³, L⁴ and k in the reaction scheme are as described above, L^{3a} represents an eliminable functional group, and A^{3a} represents hydroxyl group or a hydrocarbyloxy group having 1 to 20 carbon atoms.

Similarly, the reaction of the living chain end of the polymerization, for example, P-Li⁺, and the modifier represented by general formula (3) (the group represented by L⁵ is an eliminable functional group represented by L^{5a}) can be expressed by the following reaction scheme:

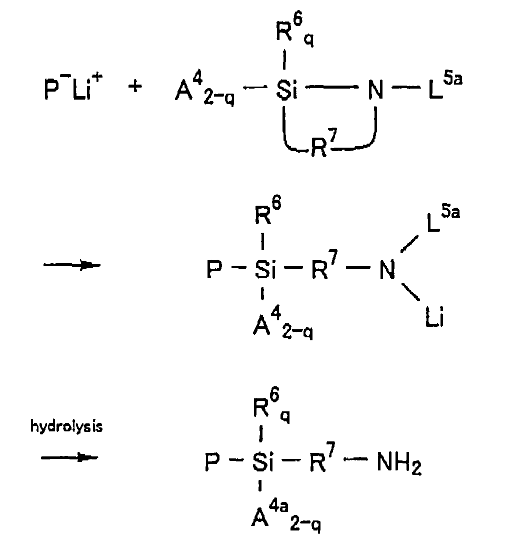

R⁶, R⁷, A⁴ and q in the reaction scheme are as described above, L^{5a} represents an eliminable functional group, and A^{4a} represents hydroxyl group or a hydrocarbyloxy group having 1 to 20 carbon atoms.

It is preferable that the amount of the modifier in the modification reaction with the modifier is 0.5 to 200 mmol/kg-conjugated diene-based copolymer, more preferably 1 to 100 mmol/kg·conjugated diene-based copolymer and most preferably 2 to 50 mmol/kg·conjugated diene-based copolymer. "conjugated diene-based copolymer" in the above means the amount by mass of the polymer obtained during the production or after the production and containing no additives such as antioxidants which are added after being produced. Excellent dispersion of fillers is obtained and the mechanical properties, the abrasion resistance and the low hysteresis property are improved by adjusting the amount of the modifier in the above range.
The method of adding the modifier is not particularly limited. The entire amount of the modifier may be added at once, the modifier may be added in separate portions, or the modifier may be added continuously. It is preferable that the entire amount of the modifier is added at once.

### <Condensation reaction>

In the present invention, the condensation reaction is conducted in the presence of a condensation catalyst comprising a metal element after the modification reaction has been completed to promote the condensation reaction in which the hydrolyzable functional group having Si in the modifier used above takes part.

The metal compound used as the condensation catalyst is an organic compound comprising at least one element belonging to any one of Groups 3, 4, 5, 12, 13, 14 and 15 of the Periodic Table (the long period type).
As the condensation catalyst described above, a compound having a tertiary amino group or an organic compound comprising at least one element belonging to any one of Groups 3, 4, 5, 12, 13, 14 and 15 of the Periodic Table (the long period type) can be used.
As the condensation catalyst, alkoxides, carboxylic acid salts and acetylacetonate complex salts comprising at least one metal selected from the group consisting of titanium (Ti), zirconium (Zr), bismuth (Bi) and aluminum (AI) are preferable.
It is preferable that the condensation catalyst is added to the reaction system of the modification while the modification reaction proceeds or after the modification reaction has been completed although the condensation catalyst may be added before the modification reaction is conducted. When the condensation catalyst is added before the modification reaction is conducted, the direct reaction with the active end takes place and, for example, the hydrocarbyloxy group having a protected primary amino group is not introduced into the active end, occasionally.

Examples of the condensation catalyst include tetrakis(2-ethyl-1,3-hexanediolato)titanium, tetrakis(2-methyl-1,3-hexanediolato)titanium, tetrakis(2-propyl-1,3-hexanediolato)titanium, tetrakis(2-butyl-1,3-hexanediolato)titanium, tetrakis(1,3-hexanediolato)-titanium, tetrakis(1,3-pentanediolato)titanium, tetrakis(2-methyl-1,3-pentanediolato)titanium, tetrakis(2-ethyl- l,3-pentanediolato)titanium, tetrakis(2-propyl-1,3-pentanediolato)titanium, tetrakis(2-butyl-1,3-pentanediolato)titanium, tetrakis(1,3-heptanediolato)titanium, tetrakis-(2-methyl-1,3-heptanediolato)titanium, tetrakis(2-ethyl-1,3-heptane-diolato)titanium, tetrakis(2-propyl-1,3-heptanediolato)titanium, tetrakis-(2-butyl-1,3-heptanediolato)titanium, tetrakis(2-ethylhexoxy)titanium, tetramethoxytitanium, tetraethoxytitanium, tetra-n-propoxytitanium, tetraisopropoxytitanium, tetra-n-butoxytitaxxium, tetra-n-butoxytitanium oligomers, tetraisobutflxytitanium, tetra-sec-butoxytitanium, tetra-tert-butoxytitanium, bis(oleate) bis(2-ethylhexanoate)titanium, titanium dipropoxy bis(triethanolaminate), titanium dibutoxy bis(triethanol-aminate), titanium tributoxy stearate, titanium tripropoxy stearate, titanium tripropoxy acetylacetonate, titanium dipropoxy bis(acetylacetonate), titanium tripropoxy (ethyl acetoacetate), titanium propoxy acetylacetonate bis(ethyl acetoacetate), titanium tributoxy acetylacetonate, titanium dibutoxy bis(acetylacetonate), titanium tributoxy ethyl acetoacetate, titanium butoxy acetylacetonate bis(ethyl acetoacetate), titanium tetrakis(acetylacetonate), titanium diacetylacetonate bis(ethyl acetoacetate), bis(2-ethylhexanoato)titanium oxide, bis(laurato)titanium oxide, bis(naphthenato)titanium oxide, bis(stearato)titanium oxide, bis(oleato)titanium oxide, bis(linoleato)-titanium oxide, tetrakis(2-ethylhexanoato)titanium, tetrakis(laurato)-titanium, tetrakis(naphthenato)titanium, tetrakis(stearato)titanium, tetrakis(oleato)titanium, tetrakis(linoleato)titanium, titanium di-n-butoxide (bis-2,4-pentanedionate), titanium oxide bis(stearate), titanium oxide bis(tetramethylheptanedionate), titanium oxide bis(pentanedionate) and titanium tetra(lactate). Among these compounds, tetrakis(2-ethyl-1,3-hexanendiolato)titanium, tetrakis(2-ethylhexoxy)titanium and titanium di-n-butoxide (bis-2,4-pentanedionate) are preferable.

Examples of the condensation catalyst other than the titanium-based catalysts include tris(2-ethylhexanoato)bismuth, tris(laurato)bismuth, tris(naphthenato)bismuth, tris(stearato)bismuth, tris(oleato)bismuth, tris(linoleato)bismuth, tetraethoxyzirconium, tetra-n-propoxyzirconium, tetraisopropoxyzirconium, tetra-n-butoxyzirconium, tetra-sec-butoxyzirconium, tetra-tert-butoxyzirconium, tetra(2-ethylhexyl)zixconium, zirconium tributoxy stearate, zirconium tributoxy acetylacetonate, zirconium dibutoxy bis(acetylacetonate), zirconium tributoxy ethyl acetoacetate, zirconium butoxy acetylacetonate bis(ethyl acetoacetate), zirconium tetrakis(acetylacetonate), zirconium diacetylacetonate bis(ethyl acetoacetate), bis(2-ethylhexanoato)zirconium oxide, bis(laurato)zirconium oxide, bis(naphthenato)zirconium oxide, bis(stearato)zirconium oxide, bis(oleato)zirconium oxide, bis(linoleato)-zirconium oxide, tetrakis(2-ethylhexanoato)zixconium, tetrakis(laurato)-zirconium, tetrakis-(naphthenato)zirconium, tetrakis(steaxato)zirconium, tetrakis(oleato)zirconium and tetrakis(linoleato)zirconium.

Further examples include triethoxyaluminum, tri-n-propoxy-aluminum, triisopropoxyaluminum, tri-n-butoxyaluminum, tri-sec-butoxyaluminum, tri-tert-butoxyaluminum, tri(2-ethylhexyl)- aluminum, aluminum dibutoxy stearate, aluminum dibutoxy acetylacetonate, aluminum butoxy bis(acetylacetonate), aluminum dibutoxy ethyl acetoacetate, aluminum tris(acetylacetate), aluminum tris(ethyl acetoacetate), tris(2-ethylhexanoato)aluminum, tris(laurato)- aluminum, tris(naphthenato)aluminum, tris(stearato)aluminum, tris(oleato)-aluminum and tris(linoleato)aluminum.

Among these catalysts, tetrakis(2-ethyl-1,3-hexanediolato)titanium, tris(2-ethylhexanoato)bismuth, tri-sec-butoxyaluminum and tetrakis-(2-ethylhexoxy)titazxium are preferable.

Among the above condensation catalysts, titanium-based condensation catalysts are preferable, and alkoxide of titanium metal, carboxylic acid salts of titanium metal and acetylacetonate complex salts of titanium metal are more preferable. It is preferable that the amount of the condensation catalyst is such that the ratio of the amount by mole of the above compound to the amount by mole of the entire hydrocarbyloxy group present in the reaction system is 0.1 to 10 and more preferably 0.5 to 5. When the amount of the condensation catalyst is in the above range, the condensation reaction proceeds efficiently. As for the time of addition of the condensation catalyst, the condensation catalyst is added, in general, 5 minutes to 5 hours after the start of the modification reaction and preferably 15 minutes to 1 hour after the start of the modification reaction.

It is preferable that the condensation reaction in the present invention is conducted in the presence of water. It is preferable that the temperature during the condensation reaction is 85 to 180°C, more preferably 100 to 170°C and most preferably 110 to 150°C.
The condensation reaction can be efficiently conducted and completed, and a decrease in the quality caused by aging reaction of the polymer due to the change of the obtained modified conjugated diene-based copolymer with time can be suppressed by adjusting the temperature during the condensation reaction in the above range.

The time of the condensation reaction is, in general, about 5 minutes to 10 hours and preferably about 15 minutes to 5 hours. The condensation reaction can be smoothly completed by adjusting the time of the condensation reaction in the above range.
The pressure of the reaction system during the condensation reaction is, in general, 0.01 to 20 MPa and preferably 0.05 to 10 MPa.
The type of the condensation reaction is not particularly limited. The condensation reaction may be conducted using a batch type reactor or using a multistage continuous reactor in accordance with a continuous process. The condensation reaction and the removal of the solvent may be conducted simultaneously.
When the silane compound having a protected primary amino group or a protected secondary amino group and a hydrolyzable functional group is used as the modifier, the protected amino group can be converted into the isolated amino group by hydrolyzing the eliminable functional group in the protected amino group. A dry polymer having the primary amino group or the secondary amino group can be obtained by removing the solvent from the product. The removal of the protective group from the protected primary amino group and/or the protected secondary amino group derived from the modifier may be conducted in any stage from the stage of the condensation treatment to the stage of obtaining the dry polymer by removing the solvent.

### (Modified conjugated diene-based copolymer obtained in accordance with the process of the present invention)

### <Properties>

The modified conjugated diene-based copolymer obtained in accordance with the process of the present invention described above has the following properties.
The modified conjugated diene-based copolymer is the copolymer obtained by bringing the modifier described above into reaction with the active end of the polymer chain in the copolymer of the conjugated diene compound and the aromatic vinyl compound. The content of the unit of the aromatic vinyl compound is 5 to 60% by mass and preferably 20 to 55% by mass from the standpoint of the balance of the fracture properties, the abrasion resistance and the hysteresis loss of the rubber composition comprising the modified conjugated diene-based copolymer.
The content of the unit of the aromatic vinyl compound in the conjugated diene-based copolymer is the value obtained from the integral ratios in the ¹H-NMR spectrum.
The content of the unit of the vinyl bond is 10 to 50% by mole and preferably 15 to 50% by mole of the unit of the conjugated diene compound from the standpoint of the balance between the fracture properties and the hysteresis loss.
The content of the vinyl bond as the microstructure of the portion of the conjugated diene compound in the conjugated diene-based copolymer is the value measured based on the integral ratios in the ¹H-NMR spectrum.

The content of a single unit chain of the aromatic vinyl compound which comprises a single polymer unit of the aromatic vinyl compound is smaller than 40% by mass of the entire bonded aromatic vinyl compound, and the content of a long unit chain of the aromatic vinyl compound which comprises at least eight consecutively bonded units of the aromatic vinyl compound is 10% by mass or smaller of the entire bonded aromatic vinyl compounds from the standpoint of maintaining the fracture properties and the abrasion resistance and suppressing an increase in the hysteresis loss of the rubber composition comprising the modified conjugated diene-based copolymer.
The content of each chain portion of the aromatic vinyl compound in the entire units of the aromatic vinyl compound is the value obtained by the combined measurements of the nuclear magnetic resonance and the gel permeation chromatography (GPC). The number of the unit of the aromatic vinyl compound in a chain portion of the aromatic vinyl compound is the value obtained by decomposition of the copolymer used as the sample with ozone, followed by the measurement in accordance with GPC.
The weight-average molecular weight Mw of the modified conjugated diene-based copolymer as measured in accordance with GPC and expressed as the value of the corresponding polystyrene is, in general, about 50,000 to 200,000 and preferably 100,000 to 150,000. The ratio of the weight-average molecular weight Mw to the number-average molecular weight Mn indicating the molecular weight distribution is, in general, 1.5 or smaller and preferably 1.2 or smaller.

It is preferable that the modified conjugated diene-based copolymer has a glass transition temperature (Tg) of 10°C or lower. When Tg is 10°C or lower, the hysteresis loss can be decreased, and flexibility of the rubber composition at low temperatures can be increased.
It is preferable that the Mooney viscosity (ML₁₊₄, 100°C) of the modified conjugated diene-based copolymer is 10 to 150 and more preferably 15 to 100. A rubber composition exhibiting excellent workability in mixing and excellent mechanical properties after vulcanization can be obtained by adjusting the Mooney viscosity in the above range.

### <Structure>

The present invention also provides the modified conjugated diene-based copolymer obtained in accordance with the above process.
Examples of the modified conjugated diene-based copolymer include copolymers having the structure in which silicon atom having a functional group having nitrogen is bonded to the polymer end of a copolymer of the conjugated diene compound and the aromatic vinyl compound, and the functional group having nitrogen has at least one group selected from primary amino groups, secondary amino groups, salts of these amino groups, primary amino groups protected with an eliminable group and secondary amino groups protected with an eliminable group.
Further examples include copolymers having a structure in which a hydrocarbyloxy group and/or hydroxyl group is bonded to the silicon atom having a functional group having nitrogen described above.
Examples of the modified conjugated diene-based copolymer having the structure described above include modified conjugated diene-based copolymers obtained by bringing, for example, the silane compound represented by the above general formula (1) into reaction with the active end of the polymer chain in a copolymer of the conjugated diene compound and the aromatic vinyl compound to modify the copolymer.

The modified conjugated diene-based copolymer of the present invention is **characterized in that** silicon atom having a functional group having nitrogen is bonded to the polymer end of the copolymer of the conjugated diene and the aromatic vinyl compound, the functional group having nitrogen has at least one group selected from primary amino groups, secondary amino groups, salts of these amino group, primary amino groups protected with an eliminable group and secondary amino groups protected with an eliminable group, the silicon atom may further have a hydrocarbyloxy group or hydroxyl group, and the bond structure of the constituting units in the copolymer is specified. Therefore, the rubber composition using the modified conjugated diene-based copolymer as the rubber component exhibits remarkably excellent interaction of the rubber component and carbon black and/or silica, can improve the dispersion of the filler and provides a tire exhibiting excellent low heat buildup property, fracture properties and abrasion resistance.

The rubber composition of the present invention will be described in the following.

### [Rubber composition]

The rubber composition of the present invention is a rubber composition using the modified conjugated diene-based copolymer of the present invention and vulcanizable with sulfur.

### (Rubber component)

It is preferable that a content of the modified conjugated diene-based copolymer in the rubber component of component (A) is 30% by mass or greater. It is more preferable that the content of the modified conjugated diene-based copolymer in the rubber component is 40% by mass or greater and most preferably 50% by mass or greater. The rubber composition exhibiting the desired physical properties can be obtained by adjusting the content of the modified conjugated diene-based copolymer in the rubber component at 30% by mass or greater.
The modified conjugated diene-based copolymer may be used singly or in combination of two or more. Examples of the other rubber component used in combination with the modified conjugated diene-based copolymer include natural rubber, synthetic isoprene rubber, butadiene rubber, styrene-butadiene rubber, ethylene-α-olefin copolymer rubber, ethylene-α-olefin-diene copolymer rubber, acrylonitrile-butadiene copolymer rubber, chloroprene rubber, halogenated butyl rubber and mixtures of these rubbers. A portion of the above rubber may have a branched structure formed by using a polyfunctional modifier such as tin tetrachloride and silicon tetrachloride.

### (Silica and/or carbon black)

In the rubber composition of the present invention, silica and/or carbon black is used as the reinforcing filler.
Examples of the silica include wet silica (hydrous silicic acid), dry silica (anhydrous silicic acid), calcium silicate and aluminum silicate. Among these silicas, wet silica which exhibits most remarkable effect of simultaneous improvements in the fracture properties and the wet gripping property is preferable.
It is preferable that the wet silica has a BET surface area of 40 to 350 m²/g. The wet silica having a BET surface area in this range exhibits an advantage such that the property of reinforcing the rubber and the dispersion into the rubber component are both excellent. It is preferable from this standpoint that silica having a BET surface area in the range of 80 to 300 m2/g is more preferable. As the silica described above, commercial products such as "NIPSIL AQ" and "NIPSIL KQ" manufactured by TOSOH SILICA Corporation and "ULTRASIL VN3" manufactured by DEGUSSA AG can be used.
The silica may be used singly or in combination of two or more.

Carbon black is not particularly limited and, for example, SRF, GPF, FEF, HAF, ISAF and SAF can be used. Carbon blacks having an iodine absorption (IA) of 40 mg/g or greater and a dibutyl phthalate absorption (DBP) of 80 ml/100 g are preferable. The effect of improving the gripping property and the resistance to fracture can be increased by using carbon black. FEF, ISAF and SAF are more preferable.

In the rubber composition of the present invention, silica alone may be used, carbon black alone may be used or silica and carbon black may be used in combination as the reinforcing filler.
It is preferable that silica and/or carbon black is used in an amount of 20 to 120 parts by mass and more preferably in an amount of 25 to 100 parts by mass based on 100 parts by mass of the rubber component from the standpoint of the reinforcing property and the effect of improving various properties. Excellent workability in plants such as workability in mixing can be exhibited and the desired fracture properties and abrasion property can be obtained as the rubber composition by adjusting the amount of carbon black and/or silica in the above range.

In the rubber composition of the present invention, when silica is used as the reinforcing filler, a silane coupling agent may be added to further improve the reinforcing property and the low heat buildup property.
Examples of the silane coupling agent include bis(3-triethoxysilylpropyl) tetrasulfide, bis(3-triethoxysilylpropyl) trisulfide, bis(3-triethoxysilylpropyl) disulfide, bis(3-triethoxysilylethyl) tetrasulfide, bis(3-trimethoxysilylpropyl) tetrasulfide, bis(2-trimethoxysilylethyl) tetrasulfide, 3-mercaptopropyltrimethoxysilane, 3-mercaptopropyl-triethoxysilane, 2-mercaptoethyltrimethoxysilane, 2-mercaptoethyltriethoxysilane, 3-trimethoxysilylpropyl-N,N-dimethylthiocarbamoyl tetrasulfide, 3-triethoxysuylp!'opyl-N,N-dimethylthjocarbamoyl tetrasulfide, 2-triethoxysilylethyI-N,N-dimethylthiocarbamoyl tetrasulfide, 3-trimethoxysilylpropylbenzothiazolyl tetrasulfide, 3-triethoxysilyl-propylbenzolyl tetrasulfide, 3-triethoxysilylpropyl methacrylate monosulfide, 3-trimethoxysilylpropyl methacrylate monosulfide, bis(3-diethoxymethylsilylpropyl) tetrasulfide, 3-mercaptopropyl-dimethoxymethylsilane, dimethoxymethylsilylpropyl-N,N-dimethyl-thiocarbamoyl tetrasulfide and dimethoxymethylsilylpropylbenzothiazolyl tetrasulfide. From the standpoint of the effect of improving the reinforcing property, bis(3-triethoxysilylpropyl) polysulfides and 3-trimethoxysilylpropylbenzothiazyl tetrasulfide are preferable.
The silane coupling agent may be used singly or in combination of two or more.
In the rubber composition of the present invention, it is preferable that the amount of the silane coupling agent is selected in the range of 1 to 20% by mass although the amount is varied depending on the type of the silane coupling agent. When the amount is less than 1% by mass, it is difficult that the effect as the coupling agent is sufficiently exhibited. When the amount exceeds 20% by mass, there is the possibility that gelation of the rubber component takes place. It is more preferable that the amount of the silane coupling agent is in the range of 5 to 15% by mass from the standpoint of the effect as the coupling agent and the prevention of gelation.

### (Preparation of rubber composition)

Where desired, the rubber composition of the present invention may comprise various chemicals conventionally used in the rubber industry such as vulcanizing agents, vulcanization accelerators, process oils, antioxidants, antiscorching agents, zinc oxide and stearic acid as long as the object of the present invention is not adversely affected.
Examples of the vulcanizing agent include sulfur. It is preferable that the amount of sulfur is 0.1 to 10.0 parts by mass and more preferably 1.0 to 5.0 parts by mass based on 100 parts by mass of the rubber composition. When the amount of sulfur is less than 0.1 part by mass, there is the possibility that the strength at break, the abrasion resistance and the low heat buildup property are decreased. An amount of sulfur exceeding 10.0 parts by mass causes loss in the rubber elasticity.

The vulcanization accelerator used in the present invention is not particularly limited. Examples of the vulcanization accelerator include thiazole-based vulcanization accelerators such as M (2-mercaptobenzothiazole), DM (dibenzothiazyl disulfide) and CZ (N-cyclohexyl-2-benzothiazylsulfenamide) and guanidine-based vulcanization accelerators such as DPG (diphenylguanidine). It is preferable that the amount of the vulcanization accelerator is 0.1 to 5.0 parts by mass and more preferably 0.2 to 3.0 parts by mass based on 100 parts by mass of the rubber composition.

Examples of the process oil which can be used in the rubber composition of the present invention include paraffinic process oils, naphthenic process oils, aromatic process oils and Low-PCA oils such as TDAE. Aromatic process oils and Low-PCA oils such as TDAE are used for applications in which the tensile strength and the abrasion resistance are important. Naphthenic process oils and paraffinic process oils are used for applications in which the hysteresis loss and the properties at low temperatures are important. It is preferable that the amount is 0 to 100 parts by mass based on 100 parts by mass of the rubber component. When the amount exceeds 100 parts by mass, the tensile strength and the low heat buildup property of the vulcanized rubber tend to become poor.

The rubber composition of the present invention can be obtained by conducting mixing using a mixer such as rolls and an internal mixer. After being processed and vulcanized, the rubber composition is used for tire applications such as tire treads, undertreads, side walls, carcass coating rubbers, belt coating rubbers, bead fillers, chafers and bead coating rubbers; vibration isolation rubbers; belts; hoses; and other industrial products. The rubber composition can be advantageously applied to the rubber for tire treads, in particular.
It is preferable that an internal mixer is used as the mixer.

As for the condition of the mixing, the rubber composition of the present invention is produced in a single stage or in plurality of separate stages. It is preferable from the standpoint of the reaction with the feller that a temperature of mixing of 130°C or higher is achieved at least in one stage.

### [Pneumatic tire]

The pneumatic tire of the present invention is produced in accordance with the conventional process using the rubber composition of the present invention. The rubber composition of the present invention comprising various chemicals as described above in the condition before being vulcanized is processed into various members, for example, at least one member selected, for example, from treads, base treads and side reinforcing rubbers, in accordance with the necessity, and laminated and formed on a tire former in accordance with the conventional process, and a green tire is formed. The formed green tire is heated under a pressure in a curing press, and a tire is obtained.
The pneumatic tire obtained as described above exhibits, in particular, excellent low fuel consumption in combination with excellent fracture properties and abrasion property. The productivity is excellent since the workability of the rubber composition is excellent.

### EXAMPLES

The present invention will be described more specifically with reference to examples in the following. However, the present invention is not limited to the examples.
The properties of the copolymers were measured in accordance with the following methods.

### <<Physical properties of polymer>>

The number-average molecular weight (Mn) and the weight-average molecular weight (Mw) were measured in accordance with the gel permeation chromatography (the GPC method) [GPC: "HLC-8020" manufactured by TOSOH Corporation; the column: "GMH-XL" manufactured by TOSOH Corporation, using two columns connected in series) using the differential refractive index. The result was expressed as the value of the corresponding polystyrene using monodisperse polystyrene as the reference material.
The microstructure of the butadiene portion of a polymer was obtained in accordance with the infrared method (the Morero's method). The content of the styrene unit in a polymer was calculated from the integral ratios in the ¹H-NMR spectrum.
The number of the styrene unit in the styrene chain portion in a polymer was obtained in accordance with the GPC method after the polymer was decomposed with ozone (Tanaka et al., "polymer", volume 22, page 1721 (1981)). The content of the single unit chain of styrene which comprises a single unit of styrene and the content of the long unit chain of styrene which comprises at least eight consecutively bonded units of styrene based on the entire amount of the styrene units were obtained.
The physical properties of a vulcanized rubber were measured in accordance with the following methods. The Mooney viscosity of a rubber composition was measured in accordance with the method also described in the following.

### <<Physical properties of vulcanized rubber>>

### (1) Low heat buildup property

Using a sheet of a vulcanized rubber, tan δ (50°C) was measured at a temperature of 50°C, a strain of 5% and a frequency of 15 Hz using an apparatus for measuring viscoelasticity (manufactured by RHEOMETRICS Corporation). The result was expressed as an index using the inverse of tan δ in Comparative Example 5 or 12 as the reference, which was set at 100. The greater the index, the smaller the rolling resistance and the lower the heat buildup.

### (2) Abrasion property

Using a sheet of a vulcanized rubber, the amount of abrasion was measured under a slipping ratio of 25% using a Lambourn-type abrasion tester. The result was expressed as an index using the inverse of the value obtained in Comparative Example 5 or 12 as the reference, which was set at 100. The temperature of the measurement was the room temperature. The greater the index, the more excellent the abrasion property.

### (3) Fracture property

Using a sheet of a vulcanized rubber, the tensile strength at break (TSb) was measured at the room temperature (25°C) in accordance with the method of Japanese Industrial Standard K 6251-2004. The result was expressed as an index using the value obtained in Comparative Example 5 or 12 as the reference, which was set at 100. The greater the index, the more excellent the fracture property.

### <<Mooney viscosity of rubber composition>>

The Mooney viscosity [ML₁₊₄/130°C] was measured at 130°C in accordance with the method of Japanese Industrial Standard K6300-1994.

### Preparation Example 1 Preparation of Modified SBR-A

Into an autoclave reactor having an inner volume of 5 liters and purged with nitrogen, 2,750 g of cyclohexane, 2.00 g of tetrahydrofuran, 160 g of styrene, 165 g of 1,3-butadiene and 34.9 mg (0.10 mmol) of potassium dodecylbenzenesulfonate (DBS-K) were placed. After the temperature of the content of the reactor was adjusted at 40°C, 215 mg (3.36 mmol) of n-butyllithium was added, and the polymerization was started.
When the temperature of the polymerization reached 55°C, 165 g of 1,3-butadiene was added over 20 minutes. The maximum temperature reached 83°C.
When the conversion of the polymerization reached 99%, 10 g of butadiene was added. After the polymerization was allowed to proceed for 5 minutes, 901 mg (2.9 mmol) of N,N-bis(trimethylsilyl)aminopropylmethyldimethoxysilane (Modifier-1) was added, and the reaction was allowed to proceed for 15 minutes. Then, 6.45 g of tetrakis(2-ethylhexoxy)titanium as the condensation catalyst was added, and the resultant mixture was stirred for 15 minutes. After 2,6-di-tert-butyl-p-cresol was added to the polymer solution obtained by the polymerization, the solvent was removed by steam stripping. The obtained rubber was dried with heated rolls, and Modified SBR-A was obtained. The properties of Modified SBR-A are shown in Table 1.

### Preparation Example 2 Preparation of Modified SBR-B

Into an autoclave reactor having an inner volume of 5 liters and purged with nitrogen, 2,750 g of cyclohexane, 2.00 g of tetrahydrofuran, 160 g of styrene, 165 g of 1,3-butadiene and 34.9 mg (0.10 mmol) of potassium dodecylbenzenesulfonate (DBS-K) were placed. After the temperature of the content of the reactor was adjusted at 40°C, 215 mg (3.36 mmol) of n-butyllithium was added, and the polymerization was started.
When the temperature of the polymerization reached 55°C, 165 g of 1,3-butadiene was added over 20 minutes. The maximum temperature reached 83°C.
When the conversion of the polymerization reached 99%, 10 g of butadiene was added. After the polymerization was allowed to proceed for 5 minutes, 545 mg (2.9 mmol) of 1-trimethylsilyl-2-ethoxymethyl-1-aza-2-silacyclopentane (Modifier-2) was added, and the reaction was allowed to proceed for 15 minutes. Then, 6.45 g of tetrakis-(2-ethylhexoxy)titanium as the condensation catalyst was added, and the resultant mixture was stirred for 15 minutes. After 2,6-di-tert-butyl-p-cresol was added to the polymer solution obtained by the polymerization, the solvent was removed by steam stripping. The obtained rubber was dried with heated rolls, and Modified SBR-B was obtained. The properties of Modified SBR-B are shown in Table 1.

### Preparation Example 3 Preparation of Modified SBR-C

Into an autoclave reactor having an inner volume of 5 liters and purged with nitrogen, 2,750 g of cyclohexane, 5.50 g of tetrahydrofuran, 100 g of styrene, 390 g of 1,3-butadiene and 72.6 mg (0.2 mmol) of potassium dodecylbenzenesulfonate (DBS-K) were placed. After the temperature of the content of the reactor was adjusted at 20°C, 215 mg (3.36 mmol) of n-butyllithium was added, and the polymerization was started. The polymerization was conducted under the adiabatic condition, and the maximum temperature reached 85°C.
When the conversion of the polymerization reached 99%, 10 g of butadiene was added. After the polymerization was allowed to proceed for 5 minutes, 901 mg (2.9 mmol) of Modifier-1 was added, and the reaction was allowed to proceed for 15 minutes. Then, 6.45 g of tetrakis(2-ethylhexoxy)titanium as the condensation catalyst was added, and the resultant mixture was stirred for 15 minutes. After 2,6-di-tert-butyl-p-cresol was added to the polymer solution obtained by the polymerization, the solvent was removed by steam stripping. The obtained rubber was dried with heated rolls, and Modified SBR-C was obtained. The properties of Modified SBR-C are shown in Table 1.

### Preparation Example 4 Preparation of Modified SBR-D

Into an autoclave reactor having an inner volume of 5 liters and purged with nitrogen, 2,750 g of cyclohexane, 1.28 g of tetrahydrofuran, 260 g of styrene, 80 g of 1,3-butadiene and 17.3 mg (0.05 mmol) of potassium dodecylbenzenesulfonate (DBS-K) were placed. After the temperature of the content of the reactor was adjusted at 50°C, 215 mg (3.36 mmol) of n-butyllithium was added, and the polymerization was started.
When the temperature of the polymerization reached 65°C, 150 g of 1,3-butadiene was added over 25 minutes. The maximum temperature reached 88°C.
When the conversion of the polymerization reached 99%, 10 g of butadiene was added. After the polymerization was allowed to proceed for 5 minutes, 901 mg (2.9 mmol) of Modifier-1 was added, and the reaction was allowed to proceed for 15 minutes. Then, 3.97 g of bis(2-ethylhexanoato)zirconium oxide as the condensation catalyst was added, and the resultant mixture was stirred for 15 minutes. After 2,6-di-tert-butyl-p-cresol was added to the polymer solution obtained by the polymerization, the solvent was removed by steam stripping. The obtained rubber was dried with heated rolls, and Modified SBR-D was obtained. The properties of Modified SBR-D are shown in Table 1.

### Preparation Example 5 Preparation of Modified SBR-E

Into an autoclave reactor having an inner volume of 5 liters and purged with nitrogen, 2,750 g of cyclohexane, 22.0 g of tetrahydrofuran, 125 g of styrene, 365 g of 1,3-butadiene and 27.7 mg (0.08 mmol) of potassium dodecylbenzenesulfonate (DBS-K) were placed. After the temperature of the content of the reactor was adjusted at 20°C, 215 mg (3.36 mmol) of n-butyllithium was added, and the polymerization was started. The polymerization was conducted under the adiabatic condition, and the maximum temperature reached 88°C.
When the conversion of the polymerization reached 99%, 10 g of butadiene was added. After the polymerization was allowed to proceed for 5 minutes, 901 mg (2.9 mmol) of Modifier-1 was added, and the reaction was allowed to proceed for 15 minutes. Then, 6.45 g of tetrakis(2-ethylhexoxy)titanium as the condensation catalyst was added, and the resultant mixture was stirred for 15 minutes. After 2,6-di-tert-butyl-p-cresol was added to the polymer solution obtained by the polymerization, the solvent was removed by steam stripping. The obtained rubber was dried with heated rolls, and Modified SBR-E was obtained. The properties of Modified SBR-E are shown in Table 1.

### Preparation Example 6 Preparation of Modified SBR-F

Into an autoclave reactor having an inner volume of 5 liters and purged with nitrogen, 2,750 g of cyclohexane, 61.9 mg of bistetrahydrofurylpropane, 160 g of styrene, 165 g of 1,3-butadiene and 5 mg (0.04 mmol) of potassium tert-amyloxide (KTA) were placed. After the temperature of the content of the reactor was adjusted at 40°C, 215 mg (3.36 mmol) of n-butyllithium was added, and the polymerization was started.
When the temperature of the polymerization reached 55°C, 165 g of 1,3-butadiene was added over 20 minutes. The maximum temperature reached 81°C.
When the conversion of the polymerization reached 99%, 10 g of butadiene was added. After the polymerization was allowed to proceed for 5 minutes, 901 mg (2.9 mmol) of Modifier-1 was added, and the reaction was allowed to proceed for 15 minutes. Then, 6.45 g of tetrakis(2-ethylhexoxy)titanium as the condensation catalyst was added, and the resultant mixture was stirred for 15 minutes. After 2,6-di-tert-butyl-p-cresol was added to the polymer solution obtained by the polymerization, the solvent was removed by steam stripping. The obtained rubber was dried with heated rolls, and Modified SBR-F was obtained. The properties of Modified SBR-F are shown in Table 1.

### Preparation Example 7 Preparation of Modified SBR-G

Into an autoclave reactor having an inner volume of 5 liters and purged with nitrogen, 2,750 g of cyclohexane, 61.9 mg of bistetrahydrofurylpropane, 160 g of styrene, 165 g of 1,3-butadiene and 13.8 mg (0.04 mmol) of potassium dodecylbenzenesulfonate (DBS-K) were placed. After the temperature of the content of the reactor was adjusted at 40°C, 215 mg (3.36 mmol) of n-butyllithium was added, and the polymerization was started.
When the temperature of the polymerization reached 55°C, 165 g of 1,3-butadiene was added over 20 minutes. The maximum temperature reached 81°C.
When the conversion of the polymerization reached 99%, 10 g of butadiene was added. After the polymerization was allowed to proceed for 5 minutes, 901 mg (2.9 mmol) of Modifier-1 was added, and the reaction was allowed to proceed for 15 minutes. Then, 6.45 g of tetrakis(2-ethylhexoxy)titanium as the condensation catalyst was added, and the resultant mixture was stirred for 15 minutes. After 2,6-di-tert-butyl-p-cresol was added to the polymer solution obtained by the polymerization, the solvent was removed by steam stripping. The obtained rubber was dried with heated rolls, and Modified SBR-G was obtained. The properties of Modified SBR-G are shown in Table 1.

### Preparation Example 8 Preparation of Modified SBR-H

Into an autoclave reactor having an inner volume of 5 liters and purged with nitrogen, 2,750 g of cyclohexane, 2.00 g of tetrahydrofuran, 160 g of styrene, 165 g of 1,3-butadiene and 34.9 mg (0.10 mmol) of potassium dodecylbenzenesulfonate (DBS-K) were placed. After the temperature of the content of the reactor was adjusted at 40°C, 215 mg (3.36 mmol) of n-butyllithium was added, and the polymerization was started.
When the temperature of the polymerization reached 55°C, 165 g of 1,3-butadiene was added over 20 minutes. The maximum temperature reached 83°C.
When the conversion of the polymerization reached 99%, 10 g of butadiene was added. After the polymerization was allowed to proceed for 5 minutes, 720 mg (2.9 mmol) of N-methyl-N-trimethylsilylamino-propylmethyldimethoxysilane (Modifier-3) was added, and the reaction was allowed to proceed for 15 minutes. Then, 6.45 g of tetrakis(2-ethylhexoxy)titanium as the condensation catalyst was added, and the resultant mixture was stirred for 15 minutes. After 2,6-di-tert-butyl-p-cresol was added to the polymer solution obtained by the polymerization, the solvent was removed by steam stripping. The obtained rubber was dried with heated rolls, and Modified SBR-H was obtained. The properties of Modified SBR-H are shown in Table 1.

### Preparation Example 9 Preparation of Modified SBR-I

Into an autoclave reactor having an inner volume of 5 liters and purged with nitrogen, 2,750 g of cyclohexane, 2.00 g of tetrahydrofuran, 160 g of styrene, 165 g of 1,3-butadiene, 34.9 mg (0.10 mmol) of potassium dodecylbenzenesulfonate (DBS-K) and 330 mg of hexamethyleneimine were placed. After the temperature of the content of the reactor was adjusted at 40°C, 215 mg (3.36 mmol) of n-butyllithium was added, and the polymerization was started.
When the temperature of the polymerization reached 55°C, 165 g of 1,3-butadiene was added over 20 minutes. The maximum temperature reached 83°C.
When the conversion of the polymerization reached 99%, 10 g of butadiene was added. After the polymerization was allowed to proceed for 5 minutes, 230 mg of Modified-1 was added, and the reaction was allowed to proceed for 15 minutes. Then, 6.45 g of tetrakis(2-ethylhexoxy)titanium as the condensation catalyst was added, and the resultant mixture was stirred for 15 minutes. After 2,6-di-tert-butyl-p-cresol was added to the polymer solution obtained by the polymerization, the solvent was removed by steam stripping. The obtained rubber was dried with heated rolls, and Modified SBR-I was obtained. The properties of Modified SBR-I are shown in Table 1.

### Preparation Example 10 Preparation of Modified SBR-J

Into an autoclave reactor having an inner volume of 5 liters and purged with nitrogen, 2,750 g of cyclohexane, 2.00 g of tetrahydrofuran, 160 g of styrene, 165 g of 1,3-butadiene and 34.9 mg (0.10 mmol) of potassium dodecylbenzenesulfonate (DBS-K) were placed. After the temperature of the content of the reactor was adjusted at 40°C, 215 mg (3.36 mmol) of n-butyllithium was added, and the polymerization was started.
When the temperature of the polymerization reached 55°C, 165 g of 1,3-butadiene was added over 20 minutes. The maximum temperature reached 83°C.
When the conversion of the polymerization reached 99%, 10 g of butadiene was added. After the polymerization was allowed to proceed for 5 minutes, 870 mg of Modifier-2 was added, and the reaction was allowed to proceed for 15 minutes. Then, 6.45 g of tetrakis(2-ethylhexoxy)titanium as the condensation catalyst was added, and the resultant mixture was stirred for 15 minutes. After 2,6-di-tert-butyl-p-cresol was added to the polymer solution obtained by the polymerization, the solvent was removed by steam stripping. The obtained rubber was dried with heated rolls, and Modified SBR-J was obtained. The properties of Modified SBR-J are shown in Table 1.

### Preparation Example 11 Preparation of Modified SBR-K

Into an autoclave reactor having an inner volume of 5 liters and purged with nitrogen, 2,750 g of cyclohexane, 2.00 g of tetrahydrofuran, 160 g of styrene, 165 g of 1,3-butadiene and 34.9 mg (0.10 mmol) of potassium dodecylbenzenesulfonate (DBS-K) were placed. After the temperature of the content of the reactor was adjusted at 40°C, 215 mg (3.36 mmol) of n-butyllithium was added, and the polymerization was started.
When the temperature of the polymerization reached 55°C, 165 g of 1,3-butadiene was added over 20 minutes. The maximum temperature reached 83°C.
When the conversion of the polymerization reached 99%, 10 g of butadiene was added. After the polymerization was allowed to proceed for 5 minutes, 1,060 mg of Modifier-1 was added, and the reaction was allowed to proceed for 15 minutes. Then, 6.45 g of tetrakis(2-ethylhexoxy)titanium as the condensation catalyst was added, and the resultant mixture was stirred for 15 minutes. After 2,6-di-tert-butyl-p-cresol was added to the polymer solution obtained by the polymerization, the solvent was removed by steam stripping. The obtained rubber was dried with heated rolls, and Modified SBR-K was obtained. The properties of Modified SBR-K are shown in Table 1.

### Comparative Preparation Example 1 Preparation of Modified SBR-L

Into an autoclave reactor having an inner volume of 5 liters and purged with nitrogen, 2,750 g of cyclohexane, 19.3 g of tetrahydrofuran, 180 g of styrene, 310 g of 1,3-butadiene and 31.1 mg (0.09 mmol) of potassium dodecylbenzenesulfonate (DBS-K) were placed. After the temperature of the content of the reactor was adjusted at 20°C, 215 mg (3.36 mmol) of n-butyllithium was added, and the polymerization was started. The polymerization was conducted under the adiabatic condition, and the maximum temperature reached 88°C.
When the conversion of the polymerization reached 99%, 10 g of butadiene was added. After the polymerization was allowed to proceed for 5 minutes, 901 mg (2.9 mmol) of Modifier-1 was added, and the reaction was allowed to proceed for 15 minutes. Then, 6.45 g of tetrakis(2-ethylhexoxy)titanium as the condensation catalyst was added, and the resultant mixture was stirred for 15 minutes. After 2,6-di-tert-butyl-p-cresol was added to the polymer solution obtained by the polymerization, the solvent was removed by steam stripping. The obtained rubber was dried with heated rolls, and Modified SBR-L was obtained. The properties of Modified SBR-L are shown in Table 1.

### Comparative Preparation Example 2 Preparation of Modified SBR-M

Into an autoclave reactor having an inner volume of 5 liters and purged with nitrogen, 2,750 g of cyclohexane, 0.28 g of tetrahydrofuran, 150 g of styrene, 350 g of 1,3-butadiene and 31.1 mg (0.09 mmol) of potassium dodecylbenzenesulfonate (DBS-K) were placed. After the temperature of the content of the reactor was adjusted at 20°C, 215 mg (3.36 mmol) of n-butyllithium was added, and the polymerization was started. The polymerization was conducted under the adiabatic condition, and the maximum temperature reached 82°C.
When the conversion of the polymerization reached 99%, 10 g of butadiene was added. After the polymerization was allowed to proceed for 5 minutes, 901 mg (2.9 mmol) of Modifier-1 was added, and the reaction was allowed to proceed for 15 minutes. Then, 6.45 g of tetrakis(2-ethylhexoxy)titanium as the condensation catalyst was added, and the resultant mixture was stirred for 15 minutes. After 2,6-di-tert-butyl-p-cresol was added to the polymer solution obtained by the polymerization, the solvent was removed by steam stripping. The obtained rubber was dried with heated rolls, and Modified SBR-M was obtained. The properties of Modified SBR-M are shown in Table 1.

### Comparative Preparation Example 3 Preparation of Modified SBR-N

Into an autoclave reactor having an inner volume of 5 liters and purged with nitrogen, 2,750 g of cyclohexane, 5.50 g of tetrahydrofuran, 120 g of styrene, 370 g of 1,3-butadiene and 69 mg (0.20 mmol) of potassium dodecylbenzenesulfonate (DBS-K) were placed. After the temperature of the content of the reactor was adjusted at 20°C, 215 mg (3.36 mmol) of n-butyllithium was added, and the polymerization was started. The polymerization was conducted under the adiabatic condition, and the maximum temperature reached 82°C.
When the conversion of the polymerization reached 99%, 10 g of butadiene was added. After the polymerization was allowed to proceed for 5 minutes, 901 mg (2.9 mmol) of Modifier-1 was added, and the reaction was allowed to proceed for 15 minutes. Then, 6.45 g of tetrakis(2-ethylhexoxy)titanium as the condensation catalyst was added, and the resultant mixture was stirred for 15 minutes. After 2,6-di-tert-butyl-p-cresol was added to the polymer solution obtained by the polymerization, the solvent was removed by steam stripping. The obtained rubber was dried with heated rolls, and Modified SBR-N was obtained. The properties of Modified SBR-N are shown in Table 1.

### Comparative Preparation Example 4 Preparation of Modified SBR-O

Into an autoclave reactor having an inner volume of 5 liters and purged with nitrogen, 2,750 g of cyclohexane, 2.00 g of tetrahydrofuran, 160 g of styrene, 165 g of 1,3-butadiene and 34.9 mg (0.10 mmol) of potassium dodecylbenzenesulfonate (DBS-K) were placed. After the temperature of the content of the reactor was adjusted at 40°C, 215 mg (3.36 mmol) of n-butyllithium was added, and the polymerization was started.
When the temperature of the polymerization reached 55°C, 165 g of 1,3-butadiene was added over 20 minutes. The maximum temperature reached 83°C.
When the conversion of the polymerization reached 99%, 10 g of butadiene was added. After the polymerization was allowed to proceed for 5 minutes, 550 mg of N,N-dimethylaminopropyltriethoxysilane was added, and the reaction was allowed to proceed for 15 minutes. Then, 6.45 g of tetrakis(2-ethylhexoxy)titanium as the condensation catalyst was added, and the resultant mixture was stirred for 15 minutes. After 2,6-di-tert-butyl-p-cresol was added to the polymer solution obtained by the polymerization, the solvent was removed by steam stripping. The obtained rubber was dried with heated rolls, and Modified SBR-0 was obtained. The properties of Modified SBR-O are shown in Table 1.

### Comparative Preparation Example 5 Preparation of Modified SBR-P

Into an autoclave reactor having an inner volume of 5 liters and purged with nitrogen, 2,750 g of cyclohexane, 19.3 g of tetrahydrofuran, 180 g of styrene, 310 g of 1,3-butadiene and 98 mg (0.28 mmol) of potassium dodecylbenzenesulfonate (DBS-K) were placed. After the temperature of the content of the reactor was adjusted at 20°C, 215 mg (3.36 mmol) of n-butyllithium was added, and the polymerization was started. The polymerization was conducted under the adiabatic condition, and the maximum temperature reached 89°C.
When the conversion of the polymerization reached 99%, 10 g of butadiene was added. After the polymerization was allowed to proceed for 5 minutes, 480 mg of silicon tetrachloride was added, and the reaction was allowed to proceed for 15 minutes. After 2,6-di-tert-butyl-p-cresol was added to the polymer solution obtained by the polymerization, the solvent was removed by steam stripping. The obtained rubber was dried with heated rolls, and Modified SBR-P was obtained. The properties of Modified SBR-P are shown in Table 1.

### Comparative Preparation Example 6 Preparation of Modified SBR-Q

Into an autoclave reactor having an inner volume of 5 liters and purged with nitrogen, 2,750 g of cyclohexane, 2.00 g of tetrahydrofuran, 160 g of styrene, 165 g of 1,3-butadiene and 34.9 mg (0.10 mmol) of potassium dodecylbenzenesulfonate (DBS-K) were placed. After the temperature of the content of the reactor was adjusted at 40°C, 215 mg (3.36 mmol) of n-butyllithium was added, and the polymerization was started.
When the temperature of the polymerization reached 55°C, 165 g of 1,3-butadiene was added over 20 minutes. The maximum temperature reached 83°C.
When the conversion of the polymerization reached 99%, 10 g of butadiene was added. After the polymerization was allowed to proceed for 5 minutes, 901 mg (2.9 mmol) of Modifier-1 was added, and the reaction was allowed to proceed for 15 minutes. After 2,6-di-tert-butyl-p-cresol was added to the polymer solution obtained by the polymerization, the solvent was removed by steam stripping. The obtained rubber was dried with heated rolls, and Modified SBR-Q was obtained. The properties of Modified SBR-Q are shown in Table 1.

### Comparative Preparation Example 7 Preparation of Modified SBR-R

Into an autoclave reactor having an inner volume of 5 liters and purged with nitrogen, 2,750 g of cyclohexane, 2.00 g of tetrahydrofuran, 160 g of styrene, 165 g of 1,3-butadiene and 34.9 mg (0.10 mmol) of potassium dodecylbenzenesulfonate (DBS-K) were placed. After the temperature of the content of the reactor was adjusted at 40°C, 215 mg (3.36 mmol) of n-butyllithium was added, and the polymerization was started.
When the temperature of the polymerization reached 55°C, 165 g of 1,3-butadiene was added over 20 minutes. The maximum temperature reached 83°C.
When the conversion of the polymerization reached 99%, 10 g of butadiene was added. After the polymerization was allowed to proceed for 5 minutes, 901 mg (2.9 mmol) of N,N-bis(trimethylsilyl)aminopropylmethyldimethoxysilane (modifier-1) was added, and the reaction was allowed to proceed for 15 minutes. After 2,6-di-tert-butyl-p-cresol was added to the polymer solution obtained by the polymerization, the solvent was removed by steam stripping. The obtained rubber was dried with heated rolls, and Modified SBR-R was obtained. The properties of Modified SBR-R are shown in Table 1.

**Table 1-1**

| Preparation Example | 1 | 2 | 3 | 4 | 5 | 6 | 7 | 8 | 9 | 10 | 11 |
|---|---|---|---|---|---|---|---|---|---|---|---|
| Comparative Preparation Example | | | | | | | | | | | |
| Modified SBR | A | B | C | D | E | F | G | H | I | J | K |
| Content of bound ST¹⁾ | 32 | 33 | 19 | 52 | 25 | 31 | 32 | 31 | 33 | 32 | 32 |
| Content of vinyl bond ²⁾ | 29 | 28 | 38 | 20 | 49 | 28 | 28 | 28 | 29 | 27 | 28 |
| ST1 ³⁾ | 37 | 37 | 31 | 36 | 35 | 33 | 34 | 37 | 35 | 36 | 34 |
| ST>8 ⁴⁾ | 2 | 2 | 1 | 3 | 2 | 1 | 2 | 2 | 2 | 1 | 1 |

**Table 1-2**

| Preparation Example | | | | | | | |
|---|---|---|---|---|---|---|---|
| Comparative Preparation Example | 1 | 2 | 3 | 4 | 5 | 6 | 7 |
| Modified SBR | L | M | N | O | P | Q | R |
| Content of bound ST ¹⁾ | 36 | 30 | 25 | 32 | 35 | 33 | 32 |
| Content of vinyl bond ²⁾ | 43 | 17 | 39 | 28 | 43 | 28 | 29 |
| ST1 ³⁾ | 58 | 42 | 50 | 35 | 37 | 34 | 37 |
| ST>8 ⁴⁾ | 7 | 25 | 16 | 2 | 2 | 2 | 2 |

| | | | | | | | |
|---|---|---|---|---|---|---|---|
| Notes: 1) The content of the styrene unit in the polymer (% by mass) 2) The content of the microstructure (the content of the vinyl bond) in the butadiene portion of the polymer 3) The relative amount of the single unit chain of styrene: the relative amount (%) of the single unit chain of styrene based on the entire amount of the styrene unit 4) The relative amount of the styrene long chain portion: the relative amount (%) of the styrene long chain portion based on the entire amount of the styrene unit | | | | | | | |

### Examples 1 to 11 and Comparative Examples 1 to 7

Rubber compositions comprising silica alone were prepared in accordance with Formulation I shown in Table 2. The Mooney viscosity of each rubber composition was measured. The rubber compositions were each vulcanized under the condition of 160°C and 15 minutes to prepare vulcanized rubber sheets for the test, and the physical properties of the vulcanized rubber sheets were measured. The results are shown in Table 3. For the preparation of the rubber composition, the components of the first stage were mixed, and the components of the second stage were added to the obtained mixture and mixed.

**Table 2**

| | | Formulation I | Formulation II |
|---|---|---|---|
| First stage (part by mass) | | | |
| | Modified SBR A∼K, L∼R ¹⁾ | 100 | 100 |
| | silica ²⁾ | 50 | - |
| | carbon black N339 ³) | - | 50 |
| | aromatic oil ⁵⁾ | - | 10 |
| | stearic acid | 1. 5 | 1.5 |
| | antioxidant 6C ⁶⁾ | 1 | 1 |
| | paraffin wax | 1 | 1 |
| | silane coupling agent ⁴) | 5 | - |

| Second stage (part by mass) | | | |
|---|---|---|---|
| | zinc oxide | 2 | 2 |
| | vulcanization accelerator DPG ⁷⁾ | 0.2 | 0.4 |
| | vulcanization accelerator DM ⁸⁾ | 1 | 0.5 |
| | vulcanization accelerator MS ⁹⁾ | 1 | 0.5 |
| | sulfur | 1.5 | 1.3 |

| | | | |
|---|---|---|---|
| Notes 1) Modified SBR: Modified SBR-A to -K are modified SBRs obtained in Preparation Examples 1 to 11, respectively; and Modified SBR-L to -R are modified SBRs obtained in Comparative Preparation Examples 1 to 7, respectively. 2) Silica: manufactured by TOSOH SILICA Corporation; "NIPSIL AQ" 3) Carbon black: manufactured by MITSUBISHI CHEMICAL Corporation; "DIABLACK N339" 4) Silane coupling agent: manufactured by DEGUSSA AG; "Si69" 5) Aromatic oil: manufactured by FUJI KOSAN Co., Ltd.; "AROMAX #3" 6) Antioxidant 6C: manufactured by OUCHI SHINKO CHEMICAL INDUSTRIAL Co., Ltd.; "NOCRAC 6C" 7) Vulcanization accelerator DPG: manufactured by OUCHI SHINKO CHEMICAL INDUSTRIAL Co., Ltd.; "NOCCELOR D" 8) Vulcanization accelerator DM: manufactured by OUCHI SHINKO CHEMICAL INDUSTRIAL Co., Ltd.; "NOCCELOR DM" 9) Vulcanization accelerator NS: manufactured by OUCHI SHINKO CHEMICAL INDUSTRIAL Co., Ltd.; "NOCCELOR NS-F" | | | |

**Table 3-1**

| Silica alone | | | | | | | | | | | |
|---|---|---|---|---|---|---|---|---|---|---|---|
| Example Comparative Example | 1 | 2 | 3 | 4 | 5 | 6 | 7 | 8 | 9 | 10 | 11 |
| Modified SBR | A | B | C | D | E | F | G | H | I | J | K |
| Low heat buildup property (index) | 139 | 138 | 137 | 135 | 132 | 142 | 141 | 129 | 135 | 136 | 132 |
| Abrasion property (index) | 121 | 122 | 117 | 122 | 118 | 125 | 126 | 121 | 127 | 121 | 120 |
| Fracture property (index) | 119 | 121 | 118 | 123 | 121 | 120 | 122 | 119 | 121 | 118 | 120 |

**Table 3-2**

| Silica alone | | | | | | | |
|---|---|---|---|---|---|---|---|
| Preparation Example | | | | | | | |
| Comparative Preparation Example | 1 | 2 | 3 | 4 | 5 | 6 | 7 |
| Modified SBR | L | M | N | O | P | Q | R |
| Low heat buildup property (index) | 112 | 109 | 111 | 102 | 100 | 121 | 125 |
| Abrasion property (index) | 102 | 110 | 103 | 112 | 100 | 114 | 115 |
| Fracture property (index) | 103 | 104 | 102 | 110 | 100 | 117 | 117 |

| | | | | | | | |
|---|---|---|---|---|---|---|---|
| Note: In Table 3, the results in Comparative Example 5 are used as the controls, and the indices for the properties are each set at 100. | | | | | | | |

### Examples 12 to 22 and Comparative Examples 8 to 14

Rubber compositions comprising carbon black alone were prepared in accordance with Formulation II shown in Table 2. The Mooney viscosity of each rubber composition was measured. The rubber compositions were each vulcanized under the condition of 160°C and 15 minutes to prepare vulcanized rubber sheets for the test, and the physical properties of the vulcanized rubber sheets were measured. The results are shown in Table 4. For the preparation of the rubber composition, the components of the first stage were mixed, and the components of the second stage were added to the obtained mixture and mixed.

**Table 4-1**

| Carbon black alone | | | | | | | | | | | |
|---|---|---|---|---|---|---|---|---|---|---|---|
| Example Comparative Example | 12 | 13 | 14 | 15 | 16 | 17 | 18 | 19 | 20 | 21 | 22 |
| Modified SBR | A | B | C | D | E | F | G | H | I | J | K |
| Low heat buildup property (index) | 140 | 139 | 141 | 134 | 139 | 145 | 147 | 135 | 140 | 141 | 130 |
| Abrasion property (index) | 123 | 126 | 129 | 124 | 121 | 127 | 128 | 125 | 127 | 121 | 117 |
| Fracture property (index) | 125 | 122 | 126 | 121 | 119 | 128 | 127 | 119 | 121 | 124 | 118 |

**Table 4-2**

| Carbon black alone | | | | | | | |
|---|---|---|---|---|---|---|---|
| Preparation Example | | | | | | | |
| Comparative Preparation Example | 8 | 9 | 10 | 11 | 12 | 13 | 14 |
| Modified SBR | L | M | N | O | P | Q | R |
| Low heat buildup property (index) | 121 | 117 | 114 | 91 | 100 | 123 | 122 |
| Abrasion property (index) | 109 | 101 | 103 | 101 | 100 | 110 | 115 |
| Fracture property (index) | 111 | 99 | 101 | 100 | 100 | 112 | 118 |

| | | | | | | | |
|---|---|---|---|---|---|---|---|
| Note: In Table 4, the results in Comparative Example 12 are used as the controls, and the indices for the properties are each set at 100. | | | | | | | |

As shown by the results in Tables 3 and 4, the rubber compositions using the modified SBR of the present invention (Examples 1 to 11 and Examples 12 to 22) exhibited more excellent results for all of the fracture property, the abrasion property and the low heat buildup property than those of Comparative Examples 1 to 7 and Comparative Examples 8 to 14 in both of the case where silica alone was used and the case where carbon black alone was used.

### INDUSTRIAL APPLICABILITY

In accordance with the process for producing a modified conjugated diene-based copolymer of the present invention, the modified conjugated diene-based copolymer which exhibits excellent interaction between the rubber component and silica and/or carbon black, improves dispersion of the filler and provides a tire exhibiting excellent low heat buildup property, fracture properties and abrasion resistance since the silane compound having a primary amino group and/or a secondary amino group protected with an eliminable functional group and hydrocarbyloxy group both bonded to the same silicon atom is used and the structure of the obtained modified conjugated diene-based copolymer is specified, can be produced.

## Claims

1. A process for producing a modified conjugated diene-based copolymer which comprises bringing a modifier into reaction with active end of a copolymer of a conjugated diene compound and an aromatic vinyl compound having the active end, wherein
(1) as the modifier, a compound having (i) a hydrolyzable functional group having silicon and (ii) a group which can be converted into a protonic amino group or a protonic amino group protected with an eliminable functional group after the reaction is used;
(2) a step of adding a condensation catalyst is conducted after the modifier is brought into the reaction; and
(3) the modified conjugated diene-based copolymer is **characterized by**
(a) a content of the unit of the aromatic vinyl compound is 5 to 60% by mass, and
(b) a content of a single unit chain of the aromatic vinyl compound which comprises a single polymer unit of the aromatic vinyl compound is smaller than 40% by mass of entire bonded aromatic vinyl compound, and a content of a long unit chain of the aromatic vinyl compound which comprises at least eight consecutively bonded units of the aromatic vinyl compound is 10% by mass or smaller of entire bonded aromatic vinyl compounds.

2. A process for producing a modified conjugated diene-based copolymer according to Claim 1, wherein the protonic amino group is a primary amino group or a secondary amino group.

3. A process for producing a modified conjugated diene-based copolymer according to any one of Claims 1 and 2, wherein the modifier is selected from silane compounds represented by general formula (1): 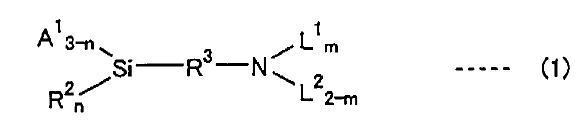 wherein A¹ represents a halogen atom or a hydrocarbyloxy group having 1 to 20 carbon atoms, R² represents a hydrocarbyl group, R³ represents a divalent hydrocarbyl group, L¹ represents an eliminable functional group, L² represents an eliminable functional group or a hydrocarbyl group, the group represented by L² may have a structure same with or different from a structure of the group represented by L¹ when L² represents an eliminable group, the group represented by L¹ and the group represented by L² may be bonded to each other, n represents 0 or 1, and m represents 1 or 2; 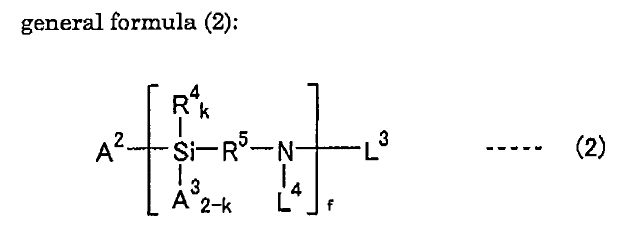 wherein R⁴ represents a hydrocarbyl group having 1 to 20 carbon atoms, R⁵ represents a divalent hydrocarbyl group having 1 to 12 carbon atoms, A² and A³ each independently represent a halogen atom or a hydrocarbyloxy group having 1 to 20 carbon atoms, L³ represents an eliminable functional group or a hydrocarbyl group, L⁴ represents an
eliminable functional group, k represents 0 or 1, and f represents an integer of 1 to 10; and 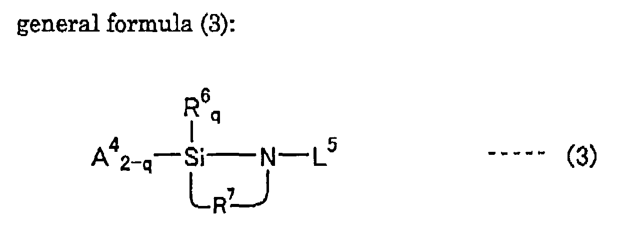 wherein A⁴ represents a halogen atom or a hydrocarbyloxy group having 1 to 20 carbon atoms, R⁶ represents a hydrocarbyl group having 1 to 20 carbon atoms, R⁷ represents a divalent hydrocarbyl group having 1, to 12 carbon atoms, L⁵ represents an eliminable functional group or a hydrocarbyl group, and q represents 0 or 1.

4. A process for producing a modified conjugated diene-based copolymer according to any one of Claims 1 to 3, wherein a heat treatment is conducted in the step of adding a condensation catalyst or after the condensation catalyst is added.

5. A process for producing a modified conjugated diene-based copolymer according to any one of Claims 1 to 4, wherein the condensation catalyst comprises a metal element.

6. A process for producing a modified conjugated diene-based copolymer according to any one of Claims 4 and 5, which comprises a step of conducting condensation reaction by the heat treatment in presence of the condensation catalyst.

7. A process for producing a modified conjugated diene-based copolymer according to any one of Claims 1 to 6, wherein a content of the unit of the aromatic vinyl compound in the modified conjugated diene-based copolymer is 25 to 55% by mass.

8. A process for producing a modified conjugated diene-based copolymer according to any one of Claims 1 to 7, wherein a content of vinyl bond in the modified conjugated diene-based copolymer is 10 to 50% by mole of entire units of the conjugated diene compound.

9. A process for producing a modified conjugated diene-based copolymer according to any one of Claims 1 to 8, wherein the copolymer of a conjugated diene compound and an aromatic vinyl compound having active end is obtained by anionic polymerization of the conjugated diene compound and the aromatic vinyl compound using an alkali metal compound as a polymerization initiator.

10. A process for producing a modified conjugated diene-based copolymer according to any one of Claims 1 to 9, wherein the copolymer of a conjugated diene compound and an aromatic vinyl compound having active end is obtained by anionic polymerization using an alkali metal compound as a polymerization initiator in presence of an ether compound and/or a tertiary amine compound.

11. A process for producing a modified conjugated diene-based copolymer according to any one of Claims 9 and 10, wherein the copolymer of a conjugated diene compound and an aromatic vinyl compound having active end is obtained by anionic polymerization in presence of at least one potassium salt selected from a group consisting of potassium alkoxides, potassium phenoxides, potassium salts of organic carboxylic acids, potassium salts of organic sulfonic acids and potassium salts of partial esters of organic phosphorous acids in combination with the alkali metal compound.

12. A process for producing a modified conjugated diene-based copolymer according to Claim 10, wherein the copolymer is obtained by anionic polymerization using tetrahydrofuran or 2,2-bis(2-tetrahydrofuryl)-propane as the ether compound.

13. A process for producing a modified conjugated diene-based copolymer according to Claim 11, wherein the copolymer is obtained by anionic polymerization using potassium tert-amyloxide or potassium dodecylbenzenesulfonate as the potassium salt.

14. A process for producing a modified conjugated diene-based copolymer according to any one of Claims 11 to 13, wherein the copolymer is obtained by anionic polymerization using the ether compound and the potassium salt in combination.

15. A process for producing a modified conjugated diene-based copolymer according to Claim 9, wherein the alkali metal compound used as the polymerization initiator is a Li-based metal compound.

16. A process for producing a modified conjugated diene-based copolymer according to Claim 15, wherein the Li-based metal compound is an organolithium compound having 1 to 8 carbon atoms.

17. A process for producing a modified conjugated diene-based copolymer according to any one of Claims 15 and 16, wherein the copolymer is obtained by anionic polymerization using a compound formed by bringing the Li-based metal compound into contact with at least one secondary amine selected from amine compounds represented by following general formula (A) and imine compounds represented by following general formula (B):
general formula (A) being: 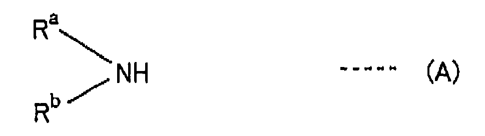 wherein R^{a} and R^{b} each independently represent a hydrocarbyl group having 1 to 20 carbon atoms, and
general formula (B) being 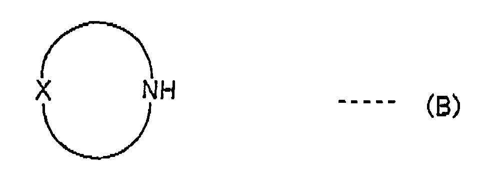 wherein X represents a group selected from following structural groups:
X-I: cyclic structural groups of saturated type represented by (CR^{c}R^{d})ₙ:
X-II: cyclic structural groups of saturated type comprising groups represented by (CR^{e}R^{f})ₘ and NR^{g} or a group represented by (CR^{e}R^{f})ₘ and O; and
X-III: cyclic structural groups having a molecular structure in which at least a portion of carbon-carbon single bonds in portions forming a ring in the structural groups represented by X-I and X-II is converted into carbon-carbon double bond;
R^{c}, R^{d}, R^{e} and R^{f} each representing hydrogen atom or a hydrocarbyl group having 1 to 10 carbon atoms selected from aliphatic hydrocarbyl groups, alicyclic hydrocarbyl groups and aromatic hydrocarbyl groups, R^{g} representing a hydrocarbyl group having 1 to 10 carbon atoms selected from aliphatic hydrocarbyl groups, alicyclic hydrocarbyl groups and aromatic hydrocarbyl groups, R^{c}, R^{d}, R^{e}, R^{f} and R^{g} representing atoms or groups same with or different from each other, n representing an integer of 3 to 15, and a sum of integers represented by m being an integer of 2 to 9.

18. A process for producing a modified conjugated diene-based copolymer according to any one of Claims 1 to 17, wherein the conjugated diene compound is at least one compound selected from 1,3-butadiene, isoprene and 2,3-dimethyl-1,3-butadiene.

19. A process for producing a modified conjugated diene-based copolymer according to any one of Claims 1 to 18, wherein the aromatic vinyl compound is styrene.

20. A process for producing a modified conjugated diene-based copolymer according to any one of Claims 1 to 19, wherein the eliminable functional group protecting the primary amino group or the secondary amino group is a trihydrocarbylsilyl group.

21. A process for producing a modified conjugated diene-based copolymer according to Claim 3, wherein n in general formula (1), k in general formula (2) and q in general formula (3) each represent 1.

22. A process for producing a modified conjugated diene-based copolymer according to Claim 5, wherein the condensation catalyst comprising a metal element is an organic compound having at least one metal belonging to any one of Group 2 to Group 15 of the Periodic Table (the long period type).

23. A process for producing a modified conjugated diene-based copolymer according to Claim 22, wherein an alkoxide, a carboxylic acid salt or an acetylacetonate complex salt of the metal is used as the condensation catalyst comprising a metal element.

24. A process for producing a modified conjugated diene-based copolymer according to any one of Claims 22 and 23, wherein the metal element in the condensation catalyst is Sn element, Ti element, Zr element, Bi element or Al element.

25. A process for producing a modified conjugated diene-based copolymer according to any one of Claims 3 to 24, wherein A¹ to A⁴ in the general formulae each represent Cl, Br or I.

26. A process for producing a modified conjugated diene-based copolymer according to any one of Claims 6 to 25, wherein A¹ to A⁴ in the general formulae each represent a hydrocarbyloxy group having 3 to 24 carbon atoms.

27. A modified conjugated diene-based copolymer obtained in accordance with the process described in any one of Claims 1 to 26.

28. A rubber composition which uses the modified conjugated diene-based copolymer described in Claim 27 and can be vulcanized with sulfur.

29. A rubber composition which comprises (A) a rubber component comprising the modified conjugated diene-based copolymer described in Claim 27 and (B) silica and/or carbon black.

30. A rubber composition according to any one of Claims 28 and 29, wherein a content of the modified conjugated diene-based copolymer in the rubber component of component (A) is 30% by mass or greater.

31. A rubber composition according to any one Claims 29 and 30, wherein a content of component (B) is 20 to 120 parts by mass based on 100 parts by mass of the rubber component of component (A).

32. A pneumatic tire which uses the rubber composition described in any one of Claims 28 to 31.

33. A pneumatic tire according to Claim 32, wherein the rubber composition is used for at least one member selected from treads, base treads, side reinforcing rubbers and bead fillers.
